# EUROPÄISCHE PATENTSCHRIFT

(11) **EP 4 379 228 B1**
(45) Veröffentlichungstag und Bekanntmachung des Hinweises auf die Patenterteilung: **28.01.2026**
(21) Anmeldenummer: 23207437.7
(22) Anmeldetag: 02.11.2023
(51) Int. Cl.: F16D 3/06, B60B 27/00, B60B 27/02, B62M 9/12

(54) **NABE INSBESONDERE FÜR FAHRRÄDER**
HUB, IN PARTICULAR FOR BICYCLES
MOYEU, EN PARTICULIER POUR BICYCLETTES

(30) Priorität: 08.11.2022 DE 102022129455
(43) Veröffentlichungstag der Anmeldung: 05.06.2024
(73) Patentinhaber: DT Swiss AG, 2504 Biel (CH)
(72) Erfinder: Spahr, Stefan, 2543 Lengnau (CH); Omlin, Nicolas, 3255 Rapperswil (CH)
(74) Vertreter: BSB Patentanwälte Schütte & Engelen Partnerschaft mbB

(56) Entgegenhaltungen:
- EP-A1- 3 118 019
- EP-A1- 3 517 315
- DE-A1- 102016 010 853

## Beschreibung

Die vorliegende Erfindung betrifft einen Rotor und eine damit ausgerüstete Nabe für im normalen und regelmäßigen bestimmungsgemäßen Betrieb wenigstens teilweise muskelbetriebene Fahrzeuge und insbesondere Fahrräder, wobei die Nabe ein Nabengehäuse, einen Rotor, eine Freilaufeinrichtung und eine Nabenachse umfasst. Das Nabengehäuse und der Rotor sind mit jeweils wenigstens zwei Wälzlagern drehbar gelagert. In dem Rotor und dem Nabengehäuse ist die Freilaufeinrichtung vorgesehen, um den Rotor in Antriebsrichtung drehfest mit dem Nabengehäuse zu verbinden. Wenn der Benutzer keine Antriebskraft aufbringt oder rückwärts tritt, ermöglicht die Freilaufeinrichtung einen Freilaufzustand, in welchem sich die Nabe weiter drehen kann, während der Rotor zum Beispiel stillsteht.

Außer bei Fahrrädern kann die Nabe auch bei anderen teilweise muskelbetriebenen Fahrzeugen und Zweirädern eingesetzt werden, die zum Beispiel über einen elektrischen Hilfsantrieb verfügen. Insbesondere wird die Nabe bei sportlichen Fahrrädern eingesetzt. In allen Ausgestaltungen wird die erfindungsgemäße Nabe bei solchen Fahrzeugen und insbesondere Fahrrädern eingesetzt, die im normalen und regelmäßigen bestimmungsgemäßen Betrieb wenigstens teilweise muskelbetrieben werden.

Im Stand der Technik sind diverse Naben bekannt geworden, die einen Freilauf aufweisen, damit sich zum Beispiel bei einer Bergabfahrt die Tretkurbel nicht ständig mitdreht. So sind im Stand der Technik Naben mit Sperrklinkenfreiläufen bekannt geworden, bei denen die Sperrklinken radial zwischen einer Freilaufstellung und einer Eingriffsstellung verschwenken können. Solche Naben verfügen über eine unterschiedliche Anzahl von Sperrklinken, wobei oft vier Sperrklinken symmetrisch auf dem Umfang verteilt angeordnet sind. Die Sperrklinken greifen bei Kraftübertragung in eine Verzahnung im Rotor ein. Durch die relativ geringe Zahl an Sperrklinken ist ein relativ großer Drehwinkel erforderlich, bis beim Antreten wieder ein Drehmoment übertragen wird.

Die DE 10 2016 010 853 A1 und die EP 3 118 019 A1 offenbaren jeweils eine Hinterradnabe für Fahrräder mit einem Rotor und einem Zahnscheibenfreilauf, bei dem beide Zahnscheiben axial beweglich sind und bei denen die rotorseitige Zahnscheibe jeweils radial außen auf dem Rotor angeordnet ist. Die EP 3 517 315 A1 der Anmelderin zeigt eine Hinterradnabe für Fahrräder, bei der die nabenseitige Zahnscheibe fest und axial unbeweglich mit dem Nabengehäuse gekoppelt ist und bei dem die rotorseitige Zahnscheibe radial innerhalb des Rotors angeordnet ist.

Mit der EP 1 121 255 B1 ist eine Nabe mit einem Zahnscheibenfreilauf bekannt geworden, der zuverlässig und sehr schnell die Antriebskraft von dem Rotor auf das Nabengehäuse überträgt. Die Reibungsverluste sind relativ gering, wenn der Benutzer die Pedale nicht betätigt. Die Nabe stellt eine zuverlässige Funktion zur Verfügung und ermöglicht eine gleichmäßige Belastung der Zähne der Zahnscheiben. Dazu werden bei dieser Nabe zwei Zahnscheiben eingesetzt, die jeweils axial beweglich sind und die über jeweils eine Feder axial von außen aufeinander zu gedrückt werden. Dadurch werden beide Zahnscheiben schwimmend gelagert und können sich bei zum Beispiel Durchbiegungen der Nabe oder bei sonstigen Belastungen jeweils zueinander ausrichten, sodass für einen besonders zuverlässigen Betrieb gesorgt wird.

Mit der EP 3 275 692 A1 der Anmelderin ist eine Weiterentwicklung einer solchen leichten Nabe mit einem Zahnscheibenfreilauf und einer zuverlässigen Funktion bekannt geworden. Bei der Nabe umfasst der Zahnscheibenfreilauf eine rotorseitige Freilaufkomponente und eine nabenseitige Freilaufkomponente, wobei die nabenseitige Freilaufkomponente in das Nabengehäuse eingeschraubt ist und einen Lagersitz für ein darin aufgenommenes Wälzlager zur Lagerung des Nabengehäuses bildet. Dadurch kann die Steifigkeit der Nabe erhöht werden.

Zur noch weiteren Steigerung der Stabilität ist mit der DE 10 2020 103 129 A1 der Anmelderin eine Nabe mit einem derartigen Zahnscheibenfreilauf bekannt geworden, wobei das auf der Seite des Rotors angeordnete Nabenlager zur Lagerung des Nabengehäuses in einem Bereich mit vergrößertem Durchmesser der Nabenachse angeordnet ist. Dadurch kann die Stabilität erhöht werden, da die dickere Wandstärke der Nabenachse im Bereich des dem Rotor zugewandten Nabenlagers erheblich größer gewählt werden kann.

Mit der DE 10 2015 009 041 A1 ist eine Nabe bekannt geworden, bei der über Kupplungsringe eine Art von Zahnscheibenfreilauf bereitgestellt wird. Es geht darum, eine montagefreundliche Spielpassung zwischen der Nabenachse und dem Innenring eines Lagers bereitzustellen, um die Montage zu vereinfachen. Des Weiteren wird ein Schallreduzierungselement eingesetzt, um die charakteristischen Geräusche eines Zahnscheibenfreilaufs zu dämpfen. Über ein Befestigungselement im Inneren der Nabenachse wird die Nabenachse im Bereich eines Lagers gespreizt, um einen sicheren Sitz und eine einfache Montage zu gewährleisten. Aufgrund der vielen unterschiedlichen Bauteile ist der Aufbau kompliziert.

Es ist deshalb die Aufgabe der vorliegenden Erfindung eine leichte Nabe zur Verfügung zu stellen, die einen einfachen Aufbau, eine hohe Stabilität und eine sehr zuverlässige Funktion ermöglicht.

Diese Aufgabe wird gelöst durch einen Rotor mit den Merkmalen des Anspruchs 1 und durch eine damit ausgerüstete Nabe mit den Merkmalen des Anspruchs 4. Bevorzugte Weiterbildungen der Erfindung sind Gegenstand der Unteransprüche. Weitere Vorteile und Merkmale der Erfindung ergeben sich aus der allgemeinen Beschreibung und der Beschreibung der Ausführungsbeispiele.

Eine erfindungsgemäße Nabe ist für wenigstens teilweise muskelbetriebene Fahrzeuge und insbesondere Fahrräder vorgesehen und umfasst eine insbesondere hohle Nabenachse, ein Nabengehäuse, einen erfindungsgemäßen Rotor mit einem Rotorkörper und eine Freilaufeinrichtung mit zwei Zahnscheibeneinrichtungen. Dabei ist eine der Zahnscheibeneinrichtung als nabenseitige Zahnscheibeneinrichtung ausgebildet und mit dem Nabengehäuse gekoppelt. Die andere Zahnscheibeneinrichtung ist als mit dem Rotorkörper gekoppelte rotorseitige Zahnscheibeneinrichtung ausgebildet und wirkt mit der nabenseitigen Zahnscheibeneinrichtung zusammen, um den Rotor mit dem Nabengehäuse in Antriebsrichtung drehfest zu koppeln und in einem Freilaufzustand voneinander zu entkoppeln. Die Zahnscheibeneinrichtungen weisen jeweils eine Stirnverzahnung zum Eingriff ineinander auf und werden über wenigstens eine Vorspanneinrichtung in eine Eingriffsstellung vorbelastet. Außen an dem Rotorkörper ist wenigstens eine Ritzelaufnahme für wenigstens eine Ritzeleinrichtung ausgebildet. Der Rotorkörper umfasst an dem nabenseitigen Ende eine innere Radialwandung zur radialen Abstützung eines (nabenseitigen) Rotorlagers. An einer Stirnseite an dem nabenseitigen Ende des Rotors ist radial zwischen der inneren Radialwandung und einer Außenwandung des Rotors eine von der Stirnseite aus zugängliche umlaufende Aufnahme ausgebildet, in der die rotorseitige Zahnscheibeneinrichtung in Antriebsrichtung drehfest und axial beweglich aufgenommen ist.

Der erfindungsgemäße Rotor und die Nabe haben viele Vorteile. Ein erheblicher Vorteil der erfindungsgemäßen Nabe besteht darin, dass ein kompakter Aufbau erreicht wird, der eine gekapselte Struktur aufweist und eine breite Abstützung des Rotors erlaubt. Dadurch, dass an dem nabenseitigen Ende des Rotorkörpers ein nabenseitiges Rotorlager an einer inneren Radialwandung vorgesehen bzw. aufgenommen ist, kann eine besonders breite Abstützung des Rotors gewährleistet werden. Durch die von der nabenseitigen Stirnseite aus zugängliche Aufnahme in dem Rotorkörper, in welchem die rotorseitige Zahnscheibeneinrichtung aufgenommen ist, kann eine einfache und zuverlässige Abdichtung der Freilaufeinrichtung gewährleistet werden, während andererseits die rotorseitige Zahnscheibeneinrichtung axial beweglich ist und an dem Rotor axial geführt wird.

In einer bevorzugten Weiterbildung ist die nabenseitige Zahnscheibeneinrichtung radial innerhalb des Nabengehäuses aufgenommen und die Stirnverzahnung ist zu dem Rotor hin ausgerichtet. Insbesondere ist die rotorseitige Zahnscheibeneinrichtung radial innerhalb des Rotors aufgenommen und die Stirnverzahnung zu dem Nabengehäuse hin ausgerichtet.

Besonders bevorzugt ist wenigstens die halbe axiale Breite der rotorseitigen Zahnscheibeneinrichtung radial innerhalb des Nabengehäuses aufgenommen. Das bedeutet, dass die rotorseitige Zahnscheibeneinrichtung in radialer Richtung unmittelbar von Teilen des Rotors umgeben ist, der im Bereich der rotorseitigen Zahnscheibeneinrichtung wiederum radial wenigstens teilweise von dem Nabengehäuse umgeben ist. Anders gesagt gibt es eine Querschnittsebene der rotorseitigen Zahnscheibeneinrichtung quer (und insbesondere senkrecht) zu der Symmetrieachse (Achsenlinie) (der Nabe), die den Rotor mit der rotorseitigen Zahnscheibeneinrichtung und auch das Nabengehäuse schneidet. Dadurch wird ein kompakter Aufbau gewährleistet.

Vorzugsweise sind die nabenseitige Zahnscheibeneinrichtung und die rotorseitige Zahnscheibeneinrichtung in Antriebsrichtung jeweils radial außen drehfest mit dem Nabengehäuse bzw. Rotor gekoppelt. Insbesondere verfügt die rotorseitige Zahnscheibeneinrichtung über eine äußere Radialverzahnung, welche mit einer radialen Innenverzahnung in dem Rotor im Eingriff steht. Die rotorseitige Zahnscheibeneinrichtung ist axial gegenüber dem Rotor bewegbar und wird durch die ineinander eingreifende radialen Innenverzahnung und die äußere Radialverzahnung axial geführt. Das bedeutet, dass die rotorseitige Zahnscheibeneinrichtung gegenüber dem Rotor in wenigstens zwei verschiedene axiale Positionen bewegbar ist. Die unterschiedlichen axialen Positionen können auch in Umfangsrichtung unterschiedlich sein, wenn beispielsweise die äußere Radialverzahnung als Schrägverzahnung ausgebildet ist.

Besonders bevorzugt weist die nabenseitige Zahnscheibeneinrichtung ebenfalls eine äußere Radialverzahnung auf, welche mit einer radialen Innenverzahnung in dem Nabengehäuse im Eingriff steht. Vorzugsweise ist die nabenseitige Zahnscheibeneinrichtung axial entsprechend gegenüber dem Nabengehäuse bewegbar. Auch hier ist eine Schrägverzahnung denkbar.

In bevorzugten Weiterbildungen ist ein Außendurchmesser der Ritzelaufnahme kleiner als ein Außendurchmesser der rotorseitigen Zahnscheibeneinrichtung und/oder kleiner als ein Außendurchmesser der Stirnverzahnung der rotorseitigen Zahnscheibeneinrichtung. Die Ritzelaufnahme dient zur Aufnahme wenigstens eines Ritzels oder mehrerer Ritzel oder eines Ritzelpaketes an dem Rotor und weist regelmäßig eine standardisierte Außenform bzw. einen standardisierten Außendurchmesser auf.

Dadurch, dass der Außendurchmesser der rotorseitigen Zahnscheibeneinrichtung vorzugsweise größer ist als der Außendurchmesser der Ritzelaufnahme, wird eine besonders sichere Abstützung und eine besonders zuverlässige Übertragung des Antriebsdrehmoments gewährleistet. Der große Außendurchmesser der Stirnverzahnung der rotorseitigen Zahnscheibeneinrichtung ermöglicht die Anordnung einer Vielzahl von Zähnen an der Stirnverzahnung, wodurch der Eingriffswinkel besonders klein wird. Das sorgt für eine direkte Reaktion der Freilaufeinrichtung. Es wird nur ein kleiner Tretwinkel benötigt, um wieder einen Eingriff zu erzeugen.

In bevorzugten Weiterbildungen ist die radiale Innenverzahnung an dem Nabengehäuse an einem in das Nabengehäuse eingeschraubten Gewindering ausgebildet. Der Gewindering kann aus dem gleichen Material wie das Nabengehäuse sein oder aber aus einem leichteren oder auch aus einem stabileren Material. Beispielsweise kann der Gewindering aus Stahl oder einem Aluminium oder Titan oder einer Legierung solcher Materialien bestehen.

In bevorzugten Ausgestaltungen weist der Gewindering an der axialen Außenseite (die dem Rotor zugewandt ist) eine zentrische und insbesondere konische Vertiefung auf, in welche ein an der nabenseitigen Stirnseite des Rotors ausgebildeter Konusabschnitt berührungsfrei eintaucht. Das ermöglicht einen kompakten Aufbau. Weiterhin kann zwischen der konischen Vertiefung und dem Konusabschnitt ein konischer Dichtabschnitt ausgebildet sein.

Vorzugsweise weist der Gewindering auf der dem Rotor abgewandten axialen Innenseite einen (konischen) Stützabschnitt auf, welcher an einer entsprechend (konisch) ausgebildeten Aufnahmekontur in dem Nabengehäuse anliegt. Insbesondere stützt sich der Stützabschnitt an der Aufnahmekontur in dem Nabengehäuse ab.

Der Gewindering verfügt über ein Außengewinde, welches in ein Innengewinde des Nabengehäuses eingeschraubt ist. Dabei ist die Orientierung derart, dass der Gewindering beim Treten in Antriebsrichtung weiter in das Nabengehäuse eingeschraubt wird bzw. ein entsprechendes Drehmoment überträgt. Dadurch wird sichergestellt, dass sich der Gewindering nicht unbeabsichtigt löst.

In bevorzugten Ausgestaltungen erstreckt sich das Außengewinde des Gewinderings axial nach außen bis über die nabenseitige Zahnscheibeneinrichtung hinaus nach außen und erstreckt sich vorzugsweise radial bis über die rotorseitige Zahnscheibeneinrichtung hin und überdeckt diese wenigstens zum Teil (in radialer Richtung). Dadurch wird ein besonders kompakter Aufbau erreicht. Außerdem kann das Außengewinde an dem Gewindering verlängert werden, wodurch die Flächenbelastung abnimmt.

In besonders bevorzugten Ausgestaltungen umfasst das Außengewinde des Gewinderings wenigstens zwei separat ausgebildete und durchgängige Gewindegänge. Vorzugsweise umfasst das Innengewinde in dem Nabengehäuse zwei entsprechend separat ausgebildete und durchgängige Gewindegänge. Ein derartiges mehrgängiges Gewinde erlaubt insgesamt eine höhere Belastbarkeit und eine in axialer Richtung geringere Kraft, die durch das eingebrachte Drehmoment auf das Nabengehäuse einwirkt.

Vorzugsweise weist wenigstens eine Zahnscheibeneinrichtung und insbesondere wenigstens die rotorseitige und/oder die nabenseitige Zahnscheibeneinrichtung einen Eingriffskörper auf, an dem die Stirnverzahnung und die äußere Radialverzahnung ausgebildet sind. Vorzugsweise weist der Eingriffskörper eine axiale Erstreckung auf, die größer ist als eine axiale Breite eines Wälzlagers. Insbesondere ist die axiale Erstreckung größer als eine axiale Breite des nabenseitigen Rotorlagers. Vorzugsweise ist eine axiale Erstreckung des Eingriffskörpers wenigstens größer als eine halbe axiale Breite des nabenseitigen Rotorlagers. Dadurch wird eine erhebliche Länge einer axialen Führung wenigstens einer Zahnscheibeneinrichtung gewährleistet.

Besonders bevorzugt weist der Eingriffskörper wenigstens einer Zahnscheibeneinrichtung eine axiale Erstreckung auf, die größer ist als eine radiale Höhe der Stirnverzahnung an dem Eingriffskörper. Insbesondere ist die axiale Erstreckung wenigstens 1,5-fach größer als eine radiale Höhe der Stirnverzahnung. Insbesondere ist eine axiale Länge der äußeren Radialverzahnung an dem Eingriffskörper (wenigstens 1,5-fach) größer als eine radiale Höhe der Stirnverzahnung. Das ermöglicht eine Zahnscheibeneinrichtung mit einem großen lichten Innendurchmesser und einer großen Kontaktfläche der Zahnscheibeneinrichtungen im Bereich der Stirnverzahnung bei einer gleichzeitig zuverlässigen und reproduzierbaren Führung in axialer Richtung.

In besonders bevorzugten Ausgestaltungen sind die nabenseitige Zahnscheibeneinrichtung und die rotorseitige Zahnscheibeneinrichtung im Wesentlichen gleich ausgebildet und besonders bevorzugt genau gleich ausgebildet. Durch gleich ausgebildete Zahnscheibeneinrichtungen wird die Montage erleichtert und es können auch Montagefehler zuverlässig vermieden werden. Außerdem wird die Vorratshaltung vereinfacht.

Besonders bevorzugt ist beiden Zahnscheibeneinrichtungen jeweils wenigstens eine Vorspanneinrichtung zugeordnet, welche die Zahnscheibeneinrichtungen jeweils schwimmend aufeinander zu drücken. Die Freilaufeinrichtung umfasst dann zwei Freilaufkomponenten, die jeweils eine Zahnscheibeneinrichtung und eine (vorzugsweise gleiche) Vorspanneinrichtung umfassen. In einfachen Ausgestaltungen wird eine Zahnscheibeneinrichtung durch den Eingriffskörper gebildet, an dem sowohl die äußere Radialverzahnung als auch die Stirnverzahnung ausgebildet ist.

Besonders bevorzugt wird der Rotor mit wenigstens und insbesondere genau zwei axial voneinander beabstandeten Rotorlagern gegenüber und insbesondere auf der Nabenachse drehbar gelagert. Dabei ist eines der Rotorlager näher an dem Nabengehäuse angeordnet und kann als nabenseitiges Rotorlager bezeichnet werden und das andere Rotorlager ist weiter von dem Nabengehäuse entfernt und kann als äußeres Rotorlager bezeichnet werden.

Vorzugsweise wird das Nabengehäuse mit wenigstens und insbesondere genau zwei axial voneinander beabstandeten Nabenlagern gegenüber und insbesondere auf der Nabenachse drehbar gelagert. Dabei ist eines der Nabenlager näher an dem Rotor angeordnet und kann als rotorseitiges Nabenlager bezeichnet werden und ein anderes Nabenlager ist weiter von dem Rotor entfernt und kann als äußeres Nabenlager bezeichnet werden. Das äußere Nabenlager und das äußere Rotorlager sind dann an voneinander entfernten Enden der Nabe angeordnet.

Der Rotorkörper weist ein nabenseitiges Ende und ein gegenüberliegendes äußeres Ende auf. Vorzugsweise weist der Rotorkörper an dem nabenseitigen Ende einen Endabschnitt mit vergrößertem Durchmesser auf, an dem (und insbesondere in dem) die rotorseitige Zahnscheibeneinrichtung aufgenommen ist. Der Endabschnitt erstreckt sich vorzugsweise von dem nabenseitigen Ende des Endabschnitts bzw. dem nabenseitigen Ende des Rotors zu einem davon entfernten anderen Ende.

Zwischen dem Nabengehäuse und dem Rotor ist vorzugsweise eine Dichtungseinrichtung ausgebildet, die zwischen dem Nabengehäuse und dem Rotor einen axial inneren (und insbesondere konischen) Dichtspalt und axial weiter außen einen äußeren Dichtspalt und axial dazwischen eine Dichtungseinheit mit einer Dichtlippe umfasst. Insbesondere wird der axial innere Dichtspalt durch einen Konusspalt zwischen dem Konusabschnitt an dem Rotor und der konischen Vertiefung in dem Gewindering ausgebildet. Besonders bevorzugt weist der Konusabschnitt eine lichte Spaltweite von weniger als 1,5 mm und vorzugsweise weniger als 1 mm auf.

In bevorzugten Ausgestaltungen weist der Endabschnitt des Rotors auf dem Außenumfang eine umlaufende Nut auf, in welcher die Dichtungseinheit angeordnet ist. Die Dichtungseinheit weist vorzugsweise einen umlaufenden Ringabschnitt in der Nut auf und eine von dem Ringabschnitt schräg nach außen abstehende elastische Dichtlippe. Der Ringabschnitt und die elastische Dichtlippe weisen im montierten Zustand eine zu dem axial äußeren Ende (des Rotors) hin geöffnete V-Form auf. Die elastische Dichtlippe verläuft dabei konisch nach außen.

An dem nabenseitigen Ende des Endabschnitts des Rotors ist vorzugsweise der Konusabschnitt ausgebildet und an dem anderen Ende des Endabschnitts ist ein nochmals vergrößerter Durchmesserbereich an dem Endabschnitt ausgebildet. Zwischen dem vergrößerten Durchmesserbereich und einer radial nach innen ragenden Dichtwandung an dem rotorseitigen Ende des Nabengehäuses ist ein (radialer) Dichtspalt zwischen dem Rotor und dem Nabengehäuse ausgebildet. Der Dichtspalt weist vorzugsweise eine lichte Abmessung von weniger als 1 mm oder weniger als 0,5 mm auf.

Vorzugsweise ist in dem Nabengehäuse benachbart zu der Dichtwandung eine radial umlaufende Dichtnut ausgebildet, in welche die elastische Dichtlippe hineinragt. Die elastische Dichtlippe legt sich bei von außen eindringendem Wasser elastisch (stärker) an die innere Wandung der Dichtnut an. Die elastische Dichtlippe kann im Normalzustand (leicht) berührend an der umlaufenden Dichtnut anliegen.

Ein radial größter Innendurchmesser (äußerster Punkt) der Dichtnut ist vorzugsweise größer als ein im Normalzustand größter Außendurchmesser (äußerster Punkt) der elastischen Dichtlippe. Dabei befindet sich der größte Innendurchmesser der Dichtnut vorzugsweise axial weiter außen als der größte Außendurchmesser der elastischen Dichtlippe. Ein im Normalzustand größter Außendurchmesser (äußerster Punkt) der elastischen Dichtlippe ist vorzugsweise größer als ein Durchmesser des äußeren Dichtspaltes zwischen Nabengehäuse und Rotor.

Der erfindungsgemäße Rotor ist für eine Nabe für wenigstens teilweise muskelbetriebene Fahrzeuge und insbesondere Fahrräder vorgesehen und umfasst einen Rotorkörper, der sich von einem inneren, nabenseitigen Ende zu einem äußeren Ende (einem von den Nabengehäuse abgewandten Ende) hin erstreckt. Der Rotor umfasst weiterhin eine mit dem Rotorkörper gekoppelte rotorseitige Zahnscheibeneinrichtung, um den Rotorkörper in Antriebsrichtung mit dem Nabengehäuse drehfest zu koppeln und in einem Freilaufzustand von einem Nabengehäuse zu entkoppeln. Die rotorseitige Zahnscheibeneinrichtung weist eine Stirnverzahnung zum Eingriff in eine mit einem Nabengehäuse gekoppelte Stirnverzahnung auf. Dabei wird die rotorseitige Zahnscheibeneinrichtung über wenigstens eine Vorspanneinrichtung in eine Eingriffsstellung vorbelastet. An dem Rotorkörper ist (außen) wenigstens eine Ritzelaufnahme für wenigstens eine Ritzeleinrichtung ausgebildet. Der Rotorkörper umfasst an dem nabenseitigen Ende eine innere Radialwandung zur radialen Abstützung eines nabenseitigen Rotorlagers. An einer Stirnseite an dem nabenseitigen Ende des Rotors ist radial zwischen der inneren Radialwandung und der Außenwandung eine von der Stirnseite aus zugängliche umlaufende Aufnahme ausgebildet, in der die rotorseitige Zahnscheibeneinrichtung in Antriebsrichtung drehfest und axial beweglich aufgenommen ist.

Der erfindungsgemäße Rotor hat viele Vorteile. Der erfindungsgemäße Rotor weist den erheblichen Vorteil auf, dass die rotorseitige Zahnscheibeneinrichtung geschützt innerhalb der Aufnahme aufgenommen ist. Weiterhin wird dadurch, dass das nabenseitige Rotorlager an dem nabenseitigen Ende des Rotors an einer inneren Radialwandung aufgenommen ist, eine axial besonders breite Abstützung des Rotors ermöglicht. Die rotorseitige Zahnscheibeneinrichtung weist einen großen inneren lichten Durchmesser auf, wodurch eine hohe Zähnezahl der Stirnverzahnung ermöglicht wird. Gleichzeitig wird einer große Kraft übertragende Fläche zur Verfügung gestellt.

In einer bevorzugten Weiterbildung des Rotors umfasst der Rotorkörper wenigstens zwei Rotorlager, nämlich das nabenseitige Rotorlager und ein davon weiter entferntes äußeres Rotorlager. Wenigstens eines der Rotorlager und insbesondere beide Rotorlager sind dazu ausgebildet, den Rotorkörper (unmittelbar) auf einer Nabenachse zu lagern.

Insbesondere weist der Rotorkörper an dem nabenseitigen Ende einen Endabschnitt mit vergrößertem Durchmesser auf, an dem und insbesondere in dem die rotorseitige Zahnscheibeneinrichtung aufgenommen ist. Auf dem Innenumfang des Endabschnitts ist eine radiale Innenverzahnung ausgebildet (innere Radialverzahnung). In der radialen Innenverzahnung ist die rotorseitige Zahnscheibeneinrichtung mit der äußeren Radialverzahnung der Zahnscheibeneinrichtung in Antriebsrichtung drehfest gekoppelt.

Vorzugsweise umfasst der Endabschnitt auf dem Außenumfang eine umlaufende Nut mit einer darin angeordneten Dichtungseinheit, wobei die Dichtungseinheit einen umlaufenden Ringabschnitt in der Nut und eine von dem Ringabschnitt schräg nach außen abstehende elastische Dichtlippe umfasst. Dabei bilden der Ringabschnitt und die elastische Dichtlippe im montierten Zustand eine zu dem äußeren Ende des Rotors hin geöffnete V-Form. Die Dichtungseinheit ist konisch nach außen geöffnet. Dadurch wird eine besonders zuverlässige Dichtung ermöglicht.

Insbesondere kann der Rotorkörper wenigstens zwei Rotorteile umfassen, wobei ein erstes Rotorteil das äußere Rotorlager und ein zweites Rotorteil das nabenseitige Rotorlager abstützt. Das ermöglicht eine flexible Ausgestaltung. Vorzugsweise ist das zweite Rotorteil in das erste Rotorteil eingeschraubt oder damit verschraubt.

Vorzugsweise sind an dem ersten Rotorteil ein Verbindungsbereich und an dem zweiten Rotorteil ein Verbindungsabschnitt ausgebildet, wobei der Verbindungsbereich des ersten Rotorteils mit einem Verbindungsabschnitt des zweiten Rotorteils verbunden ist. Dabei weist der Verbindungsabschnitt einen Gewindeabschnitt und einen Führungsabschnitt auf und der Verbindungsbereich umfasst einen Gebindebereich und einen Führungsbereich. Der Gewindebereich ist mit dem Gewindeabschnitt verschraubt und der Führungsbereich wird an dem Führungsabschnitt zentriert. Dabei ist eine radiale Toleranz zwischen dem ersten Rotorteil und dem zweiten Rotorteil an dem Gewindeabschnitt größer als an dem Führungsabschnitt. Durch eine solche Konstruktion wird eine zuverlässige und sichere Führung der beiden Rotorteile zueinander gewährleistet. An dem Rotorkörper ist es besonders wichtig, dass eine exakte und konzentrische Ausrichtung vorliegt. Das wird durch die das Zusammenwirken des Führungsbereichs mit dem Führungsabschnitt gewährleistet.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine schematische Darstellung eines Mountainbikes;
- Figur 2: eine schematische Darstellung eines Rennrades;
- Figur 3: einen perspektivische Darstellung einer anmeldungsgemäßen Nabe;
- Figur 4: eine Vorderansicht der Nabe nach Figur 3;
- Figur 5: einen Schnitt A-A durch die Nabe nach Figur 4;
- Figur 6: ein vergrößertes Detail "X" aus Figur 5;
- Figur 7: eine schematische geschnittene Ansicht des Rotors der Nabe nach Figur 5;
- Figur 8: ein vergrößertes Detail einer Variante einer anmeldungsgemäßen Nabe;
- Figur 9: eine schematische geschnittene Ansicht eines zweiteiligen Rotors für eine anmeldungsgemäße Nabe;
- Figur 10: ein schematisches Detail des zweiteiligen Rotors nach Fig. 9;
- Figur 11a,b: schematische Ansichten einer Freilaufeinrichtung und der Zahnscheibeneinrichtung für eine anmeldungsgemäße Nabe; und
- Figur 12a-c: eine schematische perspektivische Ansicht und schematische Querschnitte eines Gewinderings für eine anmeldungsgemäße Nabe.

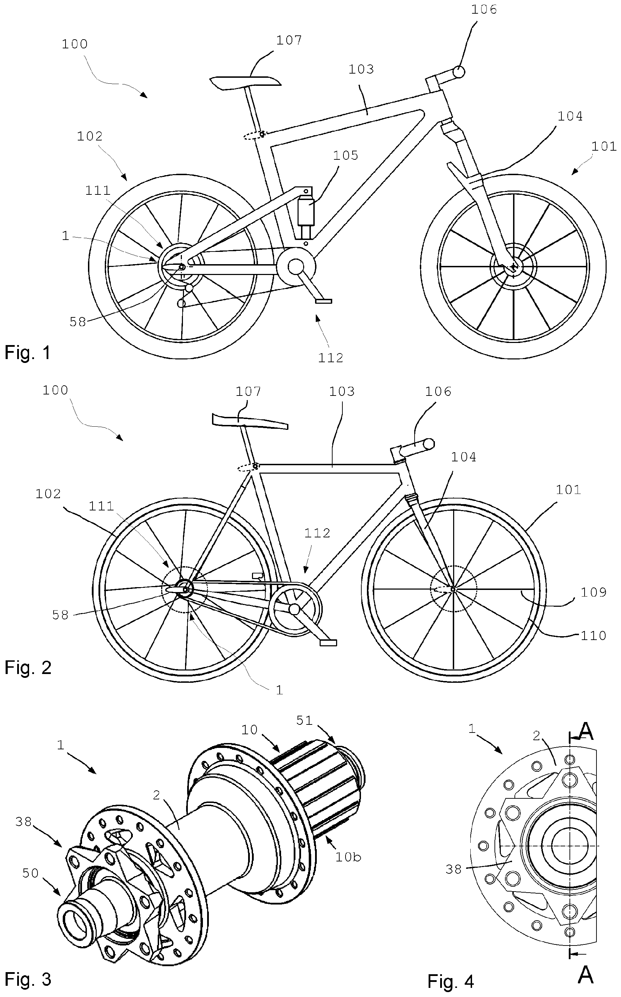

In den Figuren 1 und 2 sind jeweils ein Mountainbike bzw. ein Rennrad 100 dargestellt, die jeweils mit einer erfindungsgemäßen Nabe 1 ausgerüstet sind. Das Mountainbike bzw. Rennrad 100 verfügt jeweils über ein Vorderrad 101 und ein Hinterrad 102. An dem Hinterrad 102 wird die erfindungsgemäße Nabe 1 eingesetzt. Die beiden Räder 101, 102 verfügen über Speichen 109 und eine Felge 110 und eine Ritzeleinrichtung 111. Grundsätzlich können konventionelle Felgenbremsen oder auch andere Bremsen wie zum Beispiel Scheibenbremsen vorgesehen sein.

Ein Rad 100 verfügt über einen Rahmen 103, einen Lenker 106, einen Sattel 107, eine Gabel bzw. Federgabel 104 und im Falle des Mountainbikes kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und/oder den Rädern vorgesehen sein. Die Nabe 1 der Räder kann jeweils über ein Spanneinrichtung 58 (z. B. Steckachse oder Schnellspanner) an dem Rahmen befestigt sein.

Die in den Fahrrädern gemäß Figur 1 und 2 jeweils am Hinterrad 102 eingesetzten Naben 1 zeigt Figur 3 in einer Perspektive und Figur 4 in einer Vorderansicht.

Die Nabe 1 verfügt über ein Nabengehäuse 2 und einen Rotor 10 sowie eine Bremsscheibenaufnahme 38. Auf der Außenseite des Rotors 10 ist eine Ritzelaufnahme 10b zur Aufnahme eines Ritzelpaketes mit einer entsprechenden Anzahl von Ritzeln vorgesehen. An den beiden Enden der Nabe 1 sind Endanschläge 50, 51 vorgesehen, die hier aufgesteckt sind, aber gegebenenfalls auch eingesteckt oder angeschraubt sein können. Wie hier zu erkennen, sind die Endanschläge 50, 51 hohl ausgebildet und dienen zur Aufnahme einer Spannachse 59, mit der die Nabe 1 an dem Rahmen befestigt werden kann.

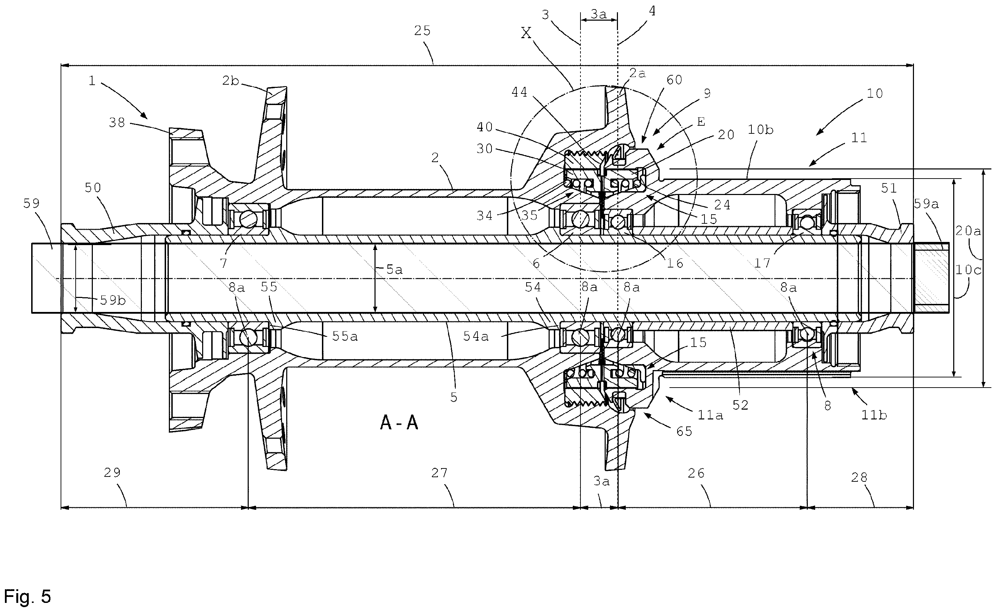

Figur 5 zeigt den A-A aus Figur 4. Die Nabe 1 weist hier eine Einbaulänge 25 von 148 mm auf. Die Nabe 1 umfasst die hohl ausgebildete Nabenachse 5, auf der das Nabengehäuse 2 über die Nabenlager 6 und 7 drehbar gelagert ist. Der Rotor 10 ist ebenfalls über Wälzlager 16 und 17 hier unmittelbar auf der Nabenachse 5 drehbar gelagert.

Auf der Nabenachse 5 ist näher an dem Rotor 10 eine Verdickung 54 mit einem radialen Absatz 54a und an dem äußeren Ende unterhalb des Nabenflansches 2b eine Verdickung 55 mit einem radialen Absatz 55a ausgebildet. Das rotorseitige Nabenlager 6 liegt an dem radialen Absatz 54a und das am anderen Ende des Nabengehäuses 2 angeordnete äußere Nabenlager 7 liegt an dem Absatz 55a der Nabenachse 5 an. Axial nach außen schließt sich an das äußere Nabenlager 7 der Endanschlag 50 an, der hier auf die Nabenachse 5 aufgeschoben ist und über einen nach außen ragenden Doppelflansch das Nabengehäuse nach außen abgedichtet.

Zum Rotor 10 hin schließt sich an das rotorseitige Nabenlager 6 ein (dünner und hier scheibenförmiger) Abstandhalter 53 und daran das nabenseitige Rotorlager 16 an. Zwischen dem nabenseitigen Rotorlager 16 und dem äußeren Rotorlager 17 ist als Abstandhalter eine Hülse 52 auf die Nabenachse 5 geschoben. Axial nach außen schließt sich an das äußere Rotorlager 17 der Endanschlag 51 an. Die Nabe 1 wird fest in den Rahmen eingespannt.

Die hohle Nabenachse 5 weist einen inneren lichten Durchmesser 5a auf, der je nach Ausgestaltung 12 mm, 15 mm oder auch 16 mm oder 17 mm oder mehr betragen kann. Durch die hohle Nabenachse 5 kann eine Spannachse 59 einer Spanneinrichtung 58 durchgeschoben werden, um die Nabe 1 an einem Rahmen eines Fahrrads zu befestigen. An einem Ende kann die Spannachse 59 beispielsweise ein Endstück 59a mit einem Außengewinde aufweisen, mit dem die Spannachse 59 in ein entsprechendes Gewinde an dem Rahmen eingeschraubt werden kann. An dem anderen Ende kann ein entsprechender Spannmechanismus vorgesehen sein, um die Nabe 1 zuverlässig an einem Rahmen aufzunehmen und zu spannen.

Der Außendurchmesser 59b der Spannachse 59 und der Innendurchmesser 5a der hohlen Nabenachse 5 sind so aufeinander abgestimmt, dass einerseits ein (relativ) ungestörtes Durchführen der Spannachse durch die hohle Nabenachse 5 ermöglicht wird, während andererseits die hohle Nabenachse 5 auch von der Spannachse 59 im Betrieb abgestützt werden kann, wenn sich aufgrund der Belastungen lokale Durchbiegungen ergeben. Dadurch wird die Stabilität der Nabe 1 insgesamt erhöht.

Möglich ist es aber auch, dass auf diese zusätzliche Abstützung verzichtet wird. Dann wird eine Spannachse 59 eingesetzt, die über weite Teile der Nabenachse 5 einen deutlichen radialen Abstand zwischen Nabenachse 5 und Spannachse 59 aufweist, um das Einführen oder Herausnehmen der Spannachse gar nicht oder äußerst wenig zu beeinträchtigen.

Anmeldungsgemäß sind die Nabenlager 6 und 7 und auch die Rotorlager 16 und 17 jeweils als Wälzlager 8 ausgeführt und weisen jeweils eine Mehrzahl von Wälzkörpern 8 auf. Hier im Ausführungsbeispiel sind die Wälzlager alle als Rillenkugellager ausgeführt.

Die Nabe 1 wird in axialer Richtung fest in dem Rahmen eingespannt. Der Kraftfluss verläuft dabei beispielsweise von dem linken Ende in Figur 5 durch den Endanschlag 50, den inneren Lagerring des äußeren Nabenlagers 7 und über den Absatz 55a der Verdickung 55 in die hohle Nabenachse 5 hinein. Von dort wird die eingeleitete Kraft über den Absatz 54a der Verdickung 54 in den inneren Lagerring des Nabenlagers 6 und durch den Abstandhalter 53 zwischen dem rotorseitigen Nabenlager und dem nabenseitigen Rotorlager 16 geleitet. Von dort tritt die Kraft in den inneren Lagerring des nabenseitigen Rotorlagers 16 ein und wird über die Hülse 52 zu dem Lagerinnenring des äußeren Rotorlagers 17 und von dort durch den Endanschlag 51 wieder in den Rahmen eingeleitet. Das Nabengehäuse 2 und der Rotor 10 werden radial und axial durch die Rillenkugellager gehalten.

Das Nabengehäuse 2 weist auf der Rotorseite einen Nabenflansch 2a und auf der anderen Seite ein Nabenflansch 2b auf. An den Nabenflanschen 2a, 2b können die Speichen befestigt werden. Gegenüber von dem Rotor 10 ist an dem anderen und äußeren Nabenende die Bremsscheibenaufnahme 38 vorgesehen.

Radial innerhalb des rotorseitigen Nabenflansches 2a ist in dem Nabengehäuse ein Gewindering 40 eingeschraubt, der eine radiale Innenverzahnung 43 aufweist, in die die nabenseitige Zahnscheibeneinrichtung 30 eingesetzt ist. An dem nabenseitigen Ende des Rotors 10 ist radial innerhalb des Endabschnitts 60 die rotorseitige Zahnscheibeneinrichtung 20 der Freilaufeinrichtung 9 eingesetzt. Der Endabschnitt 60 erstreckt sich von einem nabenseitigen Ende 60a an der nabenseitige Stirnseite 10a axial nach außen bis zu einem anderen bzw. äußeren Ende 60b.

Sowohl die rotorseitige Zahnscheibeneinrichtung 20 als auch die nabenseitige Zahnscheibeneinrichtung 30 verfügen jeweils über eine äußere Radialverzahnung 23, 33, die mit entsprechenden radialen Innenverzahnungen 43 in dem Gewindering 40 und im Inneren des Endabschnitts 60 kämmen. Darüber sind die rotorseitige Zahnscheibeneinrichtung 20 und die nabenseitige Zahnscheibeneinrichtung 30 drehfest mit dem Rotor 10 bzw. dem Nabengehäuse 2 gekoppelt.

Gleichzeitig können beide Zahnscheibeneinrichtungen 20, 30 jeweils in axialer Richtung zwischen einer Eingriffsstellung E und einer Freilaufstellung F bewegt werden. Durch die Stirnverzahnung bzw. Schrägverzahnung bedingt, gleiten die schrägen Zahnflächen der Stirnverzahnung beim Rückwärtstreten aneinander ab und drücken die Zahnscheibeneinrichtungen 20, 30 in axialer Richtung auseinander. Wird Antriebskraft aufgebracht, treten die Stirnverzahnungen wieder miteinander in Eingriff.

Die Zahnscheibeneinrichtung 20 wird durch die Vorspanneinrichtung 24, hier in Form einer zylindrischen Spiralfeder, in die dargestellte Eingriffsposition E vorbelastet. Entsprechend wird die Zahnscheibeneinrichtung 30 durch einer ebenfalls hier als zylindrische Spiralfeder ausgebildete Vorbelastungseinrichtung oder Vorspanneinrichtung 34 axial in die Eingriffsstellung E vorbelastet. Das bedeutet hier, dass die nabenseitige Zahnscheibeneinrichtung 30 in Richtung auf den Rotor vorbelastet wird, während die rotorseitige Zahnscheibeneinrichtung 20 durch die Vorbelastungseinrichtung oder Vorspanneinrichtung 24 in Richtung auf das Nabengehäuse 2 vorgespannt wird. Die Wirkung der Vorspanneinrichtung kann über mechanische Federn oder auch magnetische Federn oder auch pneumatisch bewirkt werden.

Der Rotor 10 verfügt über einen Rotorkörper 11, der sich von dem nabenseitigen Ende 11a zu dem gegenüberliegenden und äußeren Ende 11b erstreckt. Auf der Außenoberfläche des Rotorkörpers 11 ist die Ritzelaufnahme 10b vorgesehen. Dort kann ein Ritzel oder mehrere Ritzel oder es kann ein Ritzelpaket befestigt werden.

An dem nabenseitigen Ende 11a ist der Endabschnitt 60 mit einem vergrößerten Durchmesser ausgebildet. Innerhalb des Endabschnitts 60 ist die rotorseitige Zahnscheibeneinrichtung 20 aufgenommen, die einen Außendurchmesser 20a aufweist, der größer ist als ein Außendurchmesser 10c der Ritzelaufnahme 10b des Rotorkörpers 11.

Der Außendurchmesser 30a entspricht dem Außendurchmesser 20a. Auch die axialen Breite 20b und 30b sind gleich.

Wie in Figur 5 klar erkennbar, schneiden die Wälzkörperebenen bzw. Querschnittsebenen 3, 4 (durch die Wälzkörper 8a des rotorseitigen Nabenlagers 6 und des nabenseitigen Rotorlagers 16) auch jeweils die Zahnscheibeneinrichtungen 20, 30. Es ist erkennbar, dass die Wälzkörperebene bzw. Querschnittsebene 4 durch das nabenseitige Rotorlager 16, die Vorspanneinrichtung 24 und die Radialverzahnung der rotorseitigen Zahnscheibeneinrichtung 20 und durch den Nabenflansch 2a des Nabengehäuses verläuft. Weiterhin wird eine radial außen auf dem Endabschnitt 60 angeordnete Dichtungseinheit 68 durch die Querschnittsebene bzw. Wälzkörperebene 4 geschnitten.

Eine solche Anordnung, bei der die Querschnittsebenen bzw. Wälzkörperebenen 3 und 4 die Eingriffsbereiche der Radialverzahnungen der beiden Zahnscheibeneinrichtungen und die jeweils zugeordneten Wälzlager 6, 16 schneiden, bietet eine optimale Ableitung der auftretenden Belastungen im Betrieb. Der Abstand 26 der beiden Rotorlager 16, 17 kann hier sehr groß gewählt werden, da die rotorseitige Zahnscheibeneinrichtung 20 radial außerhalb des nabenseitigen Rotorlagers 16 angeordnet ist und dieses radial umgibt. Ein Abstand 27 der beiden Nabenlager 6, 7 kann ebenfalls sehr groß gewählt werden, da auch die nabenseitige Zahnscheibeneinrichtung 30 radial außerhalb des rotorseitigen Nabenlagers 6 angeordnet ist und dieses radial umgibt.

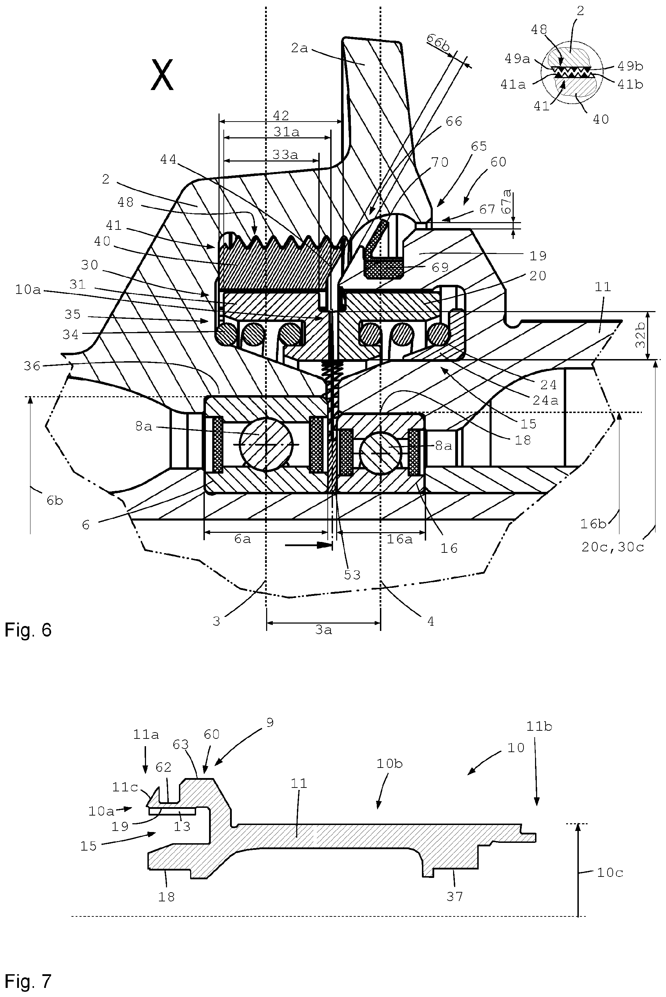

Ein lichter Innendurchmesser 20c, 30c der beiden Zahnscheibeneinrichtungen ist jeweils (erheblich) größer als ein Außendurchmesser der jeweiligen Wälzlager 6, 16. Die lichten Innendurchmesser 20c, 30c (vgl. Fig. 6) sind erheblich größer, da die Wälzlager 6, 16 an den Außendurchmessern 6b, 16b jeweils eine Innenwandung 18, 36 am Rotor 10 bzw. Nabengehäuse 2 tragen, die sich jeweils fingerartig unter den Aufnahmen 15, 35 aufeinander zu erstrecken.

Radial außerhalb der Innenwandung 18 am Rotor ist die Aufnahme 15 ausgebildet, in der die rotorseitige Zahnscheibeneinrichtung 20 drehfest aufgenommen ist. Radial außerhalb der Innenwandung 36 in dem Nabengehäuse ist die Aufnahme 35 ausgebildet, in der die nabenseitige Zahnscheibeneinrichtung 30 drehfest an dem Gewindering 40 aufgenommen ist.

Mit der Konstruktion wird bei einer Einbaubreite 25 von zum Beispiel 148 mm ein Abstand 27 der beiden Nabenlager von zwischen 55 mm und 60 mm und hier konkret zum Beispiel 57 mm ermöglicht. Der Abstand 3a der beiden Querschnittsebenen 3, 4 kann sehr gering sein und hier zum Beispiel 7 mm, 8 mm oder 9 mm betragen. Der Abstand 26 der beiden Rotorlager 16, 17 kann zwischen 27 mm und 35 mm liegen und beträgt hier zum Beispiel 32 mm. Der Abstand 28 kann bei 18 mm und der Abstand 29 bei 33 mm liegen.

Figur 6 zeigt das vergrößerte Detail X aus Figur 5. Auf der Nabenachse 5 sind das rotorseitige Nabenlager 6 mit einer Breite 6a und dessen nabenseitige Rotorlager 16 mit einer Breite 16a zu erkennen, zwischen denen ein dünner Abstandhalter 53 erkennbar ist. Der Abstandhalter 53 dient dazu, die beiden äußeren Lagerringe der Lager 6, 16 voneinander zu entkoppeln. Eine Breite des Abstandhalters 53 ist geringer als die Hälfte oder ein Viertel oder ein Achtel der axialen Breite 16a des nabenseitigen Rotorlagers 16.

Das rotorseitige Nabenlager 6 trägt eine Wandung 36 des Nabengehäuses 2, die sich fingerartig und insbesondere keilartig auf den Rotor 10 zu erstreckt und das rotorseitige Nabenlager 6 radial außen umgibt. Das Nabengehäuse 2 wird durch die Wandung 36 getragen. Radial darum herum ist die Aufnahme 35 ausgebildet, in der die nabenseitige Zahnscheibeneinrichtung 30 aufgenommen ist. Die nabenseitige Zahnscheibeneinrichtung 30 wird durch die Vorspanneinrichtung 34 in die Eingriffsstellung E vorbelastet.

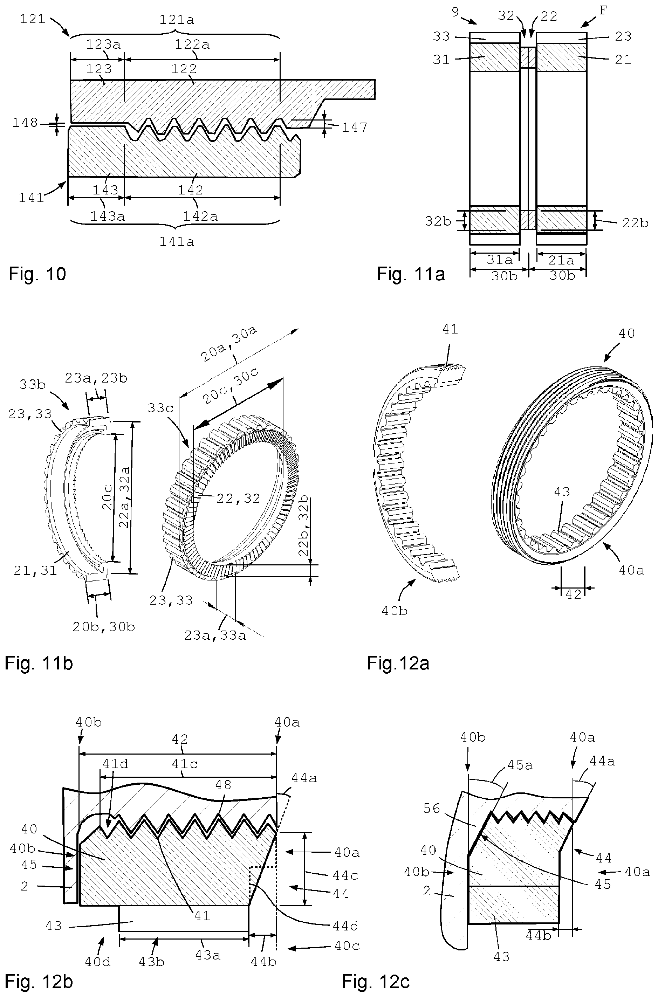

Die Zahnscheibeneinrichtung 30 verfügt über eine äußere Radialverzahnung 33 (vergleiche Figur 11b), die mit einer radialen Innenverzahnung 43 (vergleiche Figur 12a) in dem Gewindering 40 kämmt. Der Gewindering 40 ist über das Außengewinde 41 in das Innengewinde 48 in dem Nabengehäuse 2 eingeschraubt.

An der nabenseitigen Stirnseite 10 des Rotors 10 ist eine Aufnahme 15 ausgebildet, in der die rotorseitige Zahnscheibeneinrichtung 20 aufgenommen ist. Die rotorseitige Zahnscheibeneinrichtung 20 verfügt über eine zum Nabengehäuse ausgerichtete Stirnverzahnung 22. Die Stirnverzahnung 22 kämmt mit der Stirnverzahnung 32 an der nabenseitigen Zahnscheibeneinrichtung 30. Die Zahnscheibeneinrichtungen 20, 30 werden über die Vorspanneinrichtung 24, 34 jeweils axial aufeinander zu gedrückt.

Der Halter bzw. Einsatz 24a in der Aufnahme 15 an der nabenseitigen Stirnseite 10 des Rotors 10 sorgt dafür, dass identische Zahnscheibeneinrichtungen 20, 30 verwendet werden können, wodurch die Montage erleichtert wird, da Verwechslungen ausgeschlossen werden können. Produktionstechnisch ist es nötig, die Aufnahme 15 vergrößert zu gestalten, um die radiale Innenverzahnung 13 in dem Endabschnitt 60 des Rotors 10 anfertigen zu können. Es herrschen gleiche Bedingungen in den Aufnahmen 15, 35.

Eine axiale Breite 33a einer Radialverzahnung 33 der nabenseitigen Zahnscheibeneinrichtung 30 und die (vorzugsweise) identische axiale Breite 23a der Radialverzahnung 23 der rotorseitigen Zahnscheibeneinrichtung 20 kann insbesondere größer sein als eine axiale Breite 16a oder auch eine axiale Breite 6a eines Wälzlagers 6 bzw. 16.

Die axiale Breite 42 des Gewinderings 40 ist radial außen größer, da der Gewindering rotorseitig eine zentrale Vertiefung 44 aufweist, die hier als konische Vertiefung bzw. Anphasung 44 (vergleiche Figur 12b) ausgebildet ist. Dadurch kann die Gewindelänge des Außengewindes 41 vergrößert werden, was die Stabilität erhöht.

Die Eingriffskörper 21, 31 der rotorseitigen Zahnscheibeneinrichtung 20 und der nabenseitigen Zahnscheibeneinrichtung 30 weisen jeweils eine Radialverzahnung 23, 33 über eine axiale Länge 23a bzw. 33a auf, die deutlich größer ist als eine radiale Höhe 22b bzw. 32b der Stirnverzahnung 22 bzw. 32. Dadurch wird eine präzise Führung der beiden Zahnscheibeneinrichtungen in axialer Richtung gewährleistet. Die axiale Länge 21a, 31a der Eingriffskörper 21, 31 ist jeweils um die axiale Breite der Stirnverzahnungen größer.

Der Gewindering 40 kann über ein mehrgängiges Gewinde mit dem Nabengehäuse 2 verschraubt sein. Dazu ist oben rechts in Figur 6 eine optionale Ausgestaltung eingezeichnet, bei der zwei durchgängige und separate Gewindegänge 41a und 41b mit entsprechenden Gewindegängen 49a und 49b im Nabengehäuse 2 verschraubt werden.

Die Dichtungseinrichtung 65 zur Dichtung der Freilaufeinrichtung 9 vor Umwelteinflüssen umfasst hier einen nahezu horizontal ausgebildeten (äußeren) schmalen Dichtspalt 67 mit einer geringen radialen Höhe bzw. lichten Abmessung 67a, die weniger als 0,5 mm beträgt. Der äußere Dichtspalt 67 erstreckt sich zwischen einem vergrößerten Durchmesserbereich 63 an dem Endabschnitt 60 und einer radial nach innen ragenden Wandung 46 an dem Nabengehäuse 2.

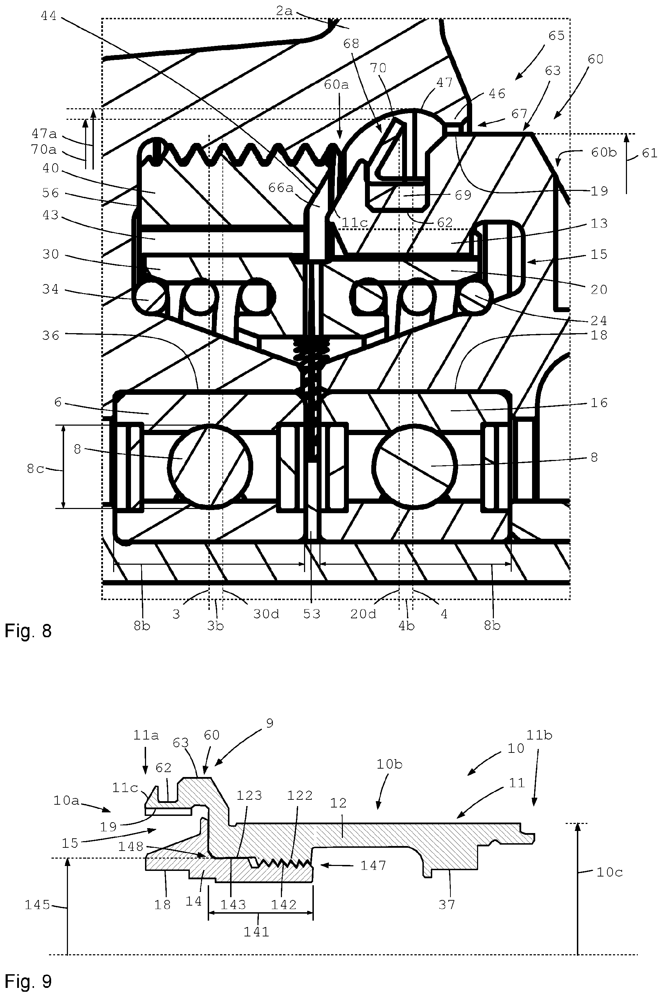

Von dort gesehen axial nach innen ist an dem Endabschnitt 60 radial außen eine Nut 62 ausgebildet, in der eine Dichtungseinheit 68 mit einem Ringabschnitt 69 aufgenommen ist. Von dem Ringabschnitt 69 erstreckt sich eine elastische Dichtlippe schräg aus der Nut 62 nach außen, sodass sich zwischen dem Ringabschnitt 69 und der elastischen Dichtlippe 70 ein V-förmiger Querschnitt ergibt, der axial nach außen zu dem äußeren Dichtspalt 67 hin geöffnet ist. Die Dichtlippe 70 ragt in eine Umfangsnut 47 (vergleiche Figur 8).

Axial noch weiter nach innen schließt sich ein konischer Spalt 66a bzw. Konusspalt an, der eine lichte Spaltweite 66b aufweist. Insgesamt umfasst die Dichtungseinrichtung 65 deshalb drei Dichtspalte, nämlich zum einen den Konusspalt 66a, dann den Spalt zwischen der elastischen Dichtlippe 70 und der Wandung der Dichtnut 47 in dem Nabengehäuse und den äußeren Dichtspalt 67 zwischen der Außenwandung 19 in dem vergrößerten Durchmesserbereich 63 an dem Endabschnitt 60 des Rotors 10.

In Figur 6 ist nochmals klar zu erkennen, dass sich die Querschnittsebene 4 durch die Wälzkörper 8a des nabenseitigen Rotorlagers 16, durch die Radialverzahnung 23 und durch die Dichtungseinheit 68 sowie den rotorseitigen Nabenflansch 2a erstreckt. Das nabenseitige Rotorlager 16 stützt die innere Radialwandung 18 des Rotorkörpers 11. Radial außerhalb davon ist die Aufnahme 15 angeordnet, in der die rotorseitige Zahnscheibeneinrichtung 20 drehfest mit dem Rotor 10 gekoppelt aufgenommen ist.

Durch den einfachen Aufbau können Montagefehler zuverlässig verhindert werden.

Figur 7 zeigt einen schematischen Querschnitt durch den Rotorkörper 11 des Rotors 10, der sich von dem nabenseitigen Ende 11a zu dem äußeren Ende 11b erstreckt. Auf der Außenseite des Rotorkörpers 11 ist die Ritzelaufnahme 10b vorgesehen, die einen Außendurchmesser 10c aufweist, der geringer ist als der Durchmesser der inneren Radialverzahnungen 13 an der Aufnahme 15 für die rotorseitige Zahnscheibeneinrichtung 20.

An dem Endbereich 60 befindet sich der vergrößerte Durchmesserbereich 63, der eine Wandung des Dichtspalts 67 zu Verfügung stellt. In der umlaufenden Nut 62 kann die Dichtungseinheit 68 angeordnet werden. An dem nabenseitigen Ende 11a ist der konische Abschnitt 11c ausgebildet, der zusammen mit der konischen Vertiefung 44 an dem Gewindering 40 den inneren Dichtspalt 66 bzw. Konusspalt 66a ausbildet. Radial innen ist die innere Radialwandung 18 zu erkennen, an der sich der Rotor 10 auf dem nabenseitigen Rotorlager 16 abstützt.

Figur 8 zeigt ein vergrößertes Detail einer Variante von Figur 6, wobei im Unterschied zur Ausführung nach Fig. 5 identisch große Wälzlager 6, 16 (mit identischen Breiten 8b) als nabenseitiges Rotorlager 16 und als rotorseitiges Nabenlager 6 verwendet werden. Das erleichtert die Montage und die Vorratshaltung nochmals, da die Anzahl unterschiedlicher Teile noch weiter reduziert wird. Auch hier wird die rotorseitige Zahnscheibeneinrichtung 20 in der Aufnahme 15 des Rotorkörpers 11 aufgenommen. Die radiale Innenverzahnung 13 an der Außenwandung 19 führt die Radialverzahnung 23 der rotorseitigen Zahnscheibeneinrichtung 20 in axialer Richtung. Durch die Vorspanneinrichtung 24 wird die Stirnverzahnung 22 in Richtung auf das Nabengehäuse zu gedrückt.

Der Außendurchmesser 70a der elastischen Dichtlippe 70 ist größer als der Außendurchmesser 61 des äußeren Dichtspalts 67. Das führt dazu, das axial durch den Dichtspalt 67 eindringendes Wasser zu einer Verformung der Dichtlippe 70 führt, wodurch sich diese (stärker) an die Wandung der Dichtnut 47 anlegt und eine noch größere Dichtwirkung erzielt.

Eine zentrale Querschnittsebene 20d (zentrale Zahnscheibenebene) durch die Radialverzahnung 23 der rotorseitigen Zahnscheibe ist nur um einen geringen Abstand 4b von einer Querschnittsebene 4 (Wälzkörperebene) durch die Wälzkörper 8a des nabenseitigen Rotorlagers 16 entfernt. Die Entfernung 4b zwischen den Querschnittsebenen 20d und 4 ist insbesondere kleiner als ein halber Durchmesser bzw. als der Radius eines Wälzkörpers 8 und ist besonders bevorzugt auch kleiner als die kleinste Wandstärke der hohlen Nabenachse 5. Entsprechendes gilt auch für die zentrale Querschnittsebene 30d durch die axiale Mitte der Radialverzahnung der rotorseitigen Zahnscheibeneinrichtung 30. Auch hier ist der Abstand 3b zwischen den beiden Querschnittsebenen 3 (Wälzkörperebene) und 30d (zentrale Zahnscheibenebene) sehr klein und insbesondere kleiner als der halbe Durchmesser oder auch der halbe Radius eines Wälzkörpers 8a des rotorseitigen Nabenlagers 6.

Die zentrale Querschnittsebene 20d durch die Radialverzahnung 23 schneidet die Wälzkörper 8a des nabenseitigen Rotorlagers 16. Auch die zentrale Querschnittsebene 30d durch die Radialverzahnung 33 schneidet die Wälzkörper 8a des rotorseitigen Nabenlagers 6. Dadurch können effektiv auch höchste Kräfte abgeleitet werden. Die Abstände 3b und 4b sind sehr klein und kleiner als der halbe Durchmesser 8c oder sogar kleiner als der halbe Radius der Wälzkörper 8a.

Figur 9 zeigt eine Abwandlung des Rotors 10, der hier aus zwei Rotorteilen 12 und 14 besteht. Der Rotorkörper 11 verfügt hier über ein erstes Rotorteil 12, welches die Ritzelaufnahme 10b zur Verfügung stellt. Des Weiteren ist an dem ersten Rotorteil 12 die Wandung 37 ausgebildet, mittels derer der Rotor 10 über das äußere Rotorlager 17 auf der Nabenachse 5 gelagert wird. An dem zweiten Rotorteil 14 ist die innere Radialwandung 18 ausgebildet, über die sich der Rotor 10 auf dem nabenseitigen Rotorlager 16 drehbar auf der Nabenachse 5 abstützt.

Das zweite Rotorteil 14 ist mit dem ersten Rotorteil 12 verschraubt. Um eine exakte Führung und einen Rundlauf zu gewährleisten, was insbesondere beim Rotor sehr wichtig ist, verfügen das erste Rotorteil 12 und das zweite Rotorteil 14 jeweils über einen Verbindungsbereich 121 und einen Verbindungsabschnitt 141. Der Verbindungsbereich 121 umfasst einen Gewindebereich 122 und einen Führungsbereich 123. Der Verbindungsabschnitt 141 verfügt über einen Gewindeabschnitt 142 und einen Führungsabschnitt 143. Der Führungsabschnitt 143 weist einen Durchmesser 145 auf.

Eine Länge 141a des Verbindungsabschnitts 141 des zweiten Rotorteils 14 entspricht insbesondere wenigstens 1/4 oder 1/3 einer Länge 14a des zweiten Rotorteils 14, insbesondere zwischen einem Viertel und der Hälfte der Länge des Rotorkörpers 11.

Ein Verhältnis einer Länge 143a des Führungsabschnitts 143 zu einem Durchmesser 145 des Führungsabschnitts 143 ist größer als 1:10. Vorzugsweise ist ein Verhältnis einer Länge 143a des Führungsabschnitts 143 zu einer Länge 141a des Verbindungsabschnitts 141 größer als 1:4.

Im montierten Zustand sind der Gewindebereich 122 und der Gewindeabschnitt 142 miteinander verschraubt. Für die nötige Zentrierung sorgen der Führungsbereich 123 und der Führungsabschnitt 143. Dabei ist die radiale Toleranz in dem Führungsabschnitt 143 geringer als die radiale Toleranz zwischen dem Gewindebereich 122 und dem Gewindeabschnitt 142.

Figur 10 zeigt das Zusammenwirken von dem Verbindungsbereich 121 und dem Verbindungsabschnitt 141 in einer vergrößerten schematischen Darstellung. Der Verbindungsbereich 121 erstreckt sich über eine Länge 121a, die sich aus der Länge 122a des Gewindebereichs 122 und der Länge 123a des Führungsbereichs 123 zusammensetzt.

Dementsprechend ist an dem zweiten Rotorteil 14 ein Verbindungsabschnitt 141 ausgebildet, der sich über eine Länge 141a erstreckt. Der Verbindungsabschnitt 141 setzt sich aus dem Gewindeabschnitt 142 und dem Führungsabschnitt 143 zusammen, die sich über eine Länge 142a bzw. 143a erstrecken. An dem Gewindebereich 122 (bzw. dem Gewindeabschnitt 142) liegt eine engere Toleranz 148 vor als in dem miteinander verschraubten Führungsbereich 123 (bzw. Führungsabschnitt 143) mit einer Toleranz 147. Dadurch wird eine hohe Präzision und Wiederholbarkeit der radialen Ausrichtung des Rotors 10 gewährleistet.

Figuren 11a und 11b zeigen die hier identischen Zahnscheibeneinrichtungen 20, 30, die jeweils über einen Eingriffskörper 21, 31 und eine Stirnverzahnung 22, 32 sowie eine äußere Radialverzahnung 23, 33 verfügen. Die äußeren Radialverzahnungen 23, 33 erstrecken sich in axialer Richtung über eine axiale Länge 23a, 33a. Die axiale Erstreckung 21a, 31a der Eingriffskörper 21, 31 ist jeweils wenigstens um die axiale Breite der Stirnverzahnungen 22, 32 größer als eine axiale Länge 23a, 33a der äußeren Radialverzahnungen 23, 33. Ein lichter Innendurchmesser 20c ist größer als die Außendurchmesser der Wälzlager 6, 16. Der Außendurchmesser 22a, 32a ist hier größer als der Außendurchmesser 10c der Ritzelaufnahme 10b.

Die Zahl der Zähne der Stirnverzahnung ist vorzugsweise größer als 72 und kann auch 90, 100, 110 oder 120 oder mehr betragen.

Die äußeren Radialverzahnungen 23, 33 der Zahnscheibeneinrichtungen 20, 30 und die radialen Innenverzahnungen 13, 43 weisen vorzugsweise zwischen 20 und 60 Radialzähne auf. Hier im Ausführungsbeispiel umfassen die Zahnscheibeneinrichtungen 20, 30 etwa 36 Radialzähne.

Eine radiale Erstreckung 22b, 32b der Stirnverzahnungen 22, 32 ist geringer als die axiale Länge 23a, 33a der Radialverzahnungen 23, 33.

In den Figuren 12a, 12b und 12c sind Varianten des Gewinderings 40 dargestellt, der jeweils über eine axiale Breite 42 verfügt und auf dem Außenumfang über ein vorzugsweise mehrgängiges Gewinde verfügt, mit dem der Gewindering in ein entsprechendes Gewinde in dem Nabengehäuse 2 eingeschraubt wird.

An dem rotorseitigen Ende 40a des Gewinderings 40 ist eine zentrale Vertiefung 44 hier in Form einer Anphasung bzw. konischen Vertiefung 44 ausgebildet, die unter einem Winkel 44a von zum Beispiel 30° verläuft und eine Tiefe 44b aufweist.

Der Gewindering 40 ist im bestimmungsgemäß montierten Zustand in das Nabengehäuse 2 eingeschraubt. Die nabenseitige Zahnscheibeneinrichtung 30 der Freilaufeinrichtung 9 ist darin aufgenommen. Die Stirnverzahnung 32 weist in Richtung des Rotors 10 und wird über eine Vorspanneinrichtung 24 in die Eingriffsstellung (E) vorbelastet.

Der Gewindering 40 weist eine Außenkontur 41d mit einem Außengewinde 41 auf und verfügt über eine zentrale Durchgangsöffnung 40c mit einer Innenkontur 40d. Die Innenkontur 40d verfügt über eine unrunde innere Koppelkontur 43b, die mit einer passenden unrunden äußeren Koppelkontur 33b auf dem Außenumfang 33c der nabenseitigen Zahnscheibeneinrichtung 30 in Antriebsrichtung drehfest koppelt. Die innere Koppelkontur 43b kann sich über die gesamte Länge oder nur einen Teil der Länge der Innenkontur 40d erstrecken.

Der Gewindering 40 weist am rotorseitigen Ende 40a eine zentrale Vertiefung 44 auf, sodass sich das Außengewinde 41 an dem Gewindering 40 axial weiter nach außen in Richtung auf den Rotor 10 erstreckt als die innere Koppelkontur 43b. Dadurch wird es möglich, das Außengewinde 41 des Gewinderings 40 in Richtung auf den Rotor 10 hin zu verbreitern. Es ist eine bessere Aufnahme des Gewinderings 40 in dem Nabengehäuse 2 möglich. Die Festigkeit wird verbessert. Das Außengewinde 41 wird verlängert.

Dadurch ist eine axiale Länge 41c des Außengewindes 41 größer als eine axiale Länge 33a der Koppelstruktur, die die innere Koppelkontur 43b und die äußere Koppelkontur 33b umfasst. Der Gewindering 40 wird mit dem Außengewinde 41 in ein Innengewinde 48 des Nabengehäuses 2 eingeschraubt.

Die nabenseitige Zahnscheibeneinrichtung 30 ist radial innerhalb des Gewinderings 40 über die Koppelstruktur 33b, 43b in Antriebsrichtung drehfest und axial bewegbar aufgenommen. Der Gewindering 40 weist am rotorseitigen Ende 40a eine zentrale und hier zentrische Vertiefung 44 auf. Die axiale Breite 41c des Außengewindes 41 ist breiter als die axiale Breite 33a der Koppelstruktur.

Die zentrale Vertiefung 44 ist in der Variante nach Figur 12b als konische Vertiefung ausgebildet. Die Vertiefung 44 weist in allen Ausführungsbeispielen eine axiale Tiefe 44b von wenigstens 5% (und insbesondere wenigstens 10%) der axialen Breite 42 des Gewinderings 40 auf. Eine axiale Länge 41c der Außenkontur 41d des Gewinderings 40 ist größer als eine axiale Länge 43a der radialen Innenverzahnung 43 (als innerer Koppelkontur 43b).

Die axiale Tiefe 44b der zentralen Vertiefung 44 beträgt zwischen 5% und 25% der axialen Breite 42 des Gewinderings 40 und vorzugsweise zwischen 10% und 20% der axialen Breite 42 des Gewinderings 40. Die axiale Tiefe 44b der zentralen Vertiefung 44 liegt vorzugsweise zwischen 0,5 mm und 3 mm.

Die zentrale Vertiefung 44 kann in allen Ausgestaltungen auch gestuft und z.B. als abgestufte Vertiefung 44d ausgeführt sein, wie beispielsweise gestrichelt in Figur 12b angedeutet. Möglich ist auch eine abgestufte und konische Ausgestaltung. Vorzugsweise ist die zentrale Vertiefung 44 konisch oder auch bauchig als zentrische Anphasung ausgebildet. Ein Winkel oder Konuswinkel 44a der (konischen) Vertiefung 44 zu einer Ebene quer zu einer Symmetrieachse der Nabe oder Nabenachse liegt insbesondere zwischen 5% und 30°.

Im Ausführungsbeispiel umfasst die innere Koppelkontur 43b eine radiale Innenverzahnung 43 an dem Gewindering 40 oder ist als solche ausgebildet. Die äußere Koppelkontur 33b an der nabenseitigen Zahnscheibeneinrichtung 30 umfasst eine äußere Radialverzahnung 33 oder ist als solche ausgebildet. Ein an der Stirnseite 10a des Rotors 10 ausgebildeter Konusabschnitt 11c taucht im montierten Zustand berührungsfrei in die zentrale Vertiefung 44 an dem Gewindering 40 ein. Dazwischen wird ein Dichtspalt ausgebildet.

An dem anderen Ende 40b kann ein konischer Stützabschnitt 45 ausgebildet sein (vgl. Fig. 12c), der sich unter dem konischen Winkel 45a (z. B. 30°) erstreckt. Durch einen solchen konischen Stützabschnitt 45 kann axialer Bauraum spart werden. Möglich ist es aber auch, dass der Stützabschnitt 45 senkrecht zu Symmetrieachse ausgebildet ist. Das erleichtert die Fertigung.

Insgesamt wird eine vorteilhafte Nabe 1 zur Verfügung gestellt, die einfach aufgebaut ist. Die Nabe 1 ist leicht zu montieren und verfügt nur über eine relativ geringe Teilezahl. Es wird eine hohe Stabilität erreicht. Durch eine hohe Zähnezahl der Stirnverzahnung kann ein sehr geringer Eingriffswinkel zur Verfügung gestellt werden.

Durch die Anordnung der rotorseitigen Zahnscheibeneinrichtung 20 in der Aufnahme 15 in dem Rotor kann eine kompakte Nabe 1 zur Verfügung gestellt werden, bei der die rotorseitige Zahnscheibeneinrichtung 20 in der inneren Radialverzahnung 13 des Rotors geführt wird. Dadurch kann eine hochqualitative axiale Führung gewährleistet werden. Der große Durchmesser der Radialverzahnung und damit der axialen Führung verhindert das Verkippen und Verkanten und sorgt für eine zuverlässige Funktion.

**Bezugszeichenliste:**

| | | | |
|---|---|---|---|
| 1 | Nabe | 148 | Toleranz von 143/123 |
| 2 | Nabengehäuse | 15 | Aufnahme |
| 2a | Nabenflansch | 16 | nabenseitiges Rotorlager |
| 2b | Nabenflansch | 16a | axiale Breite |
| 3 | Querschnittsebene, Wälzkörperebene | 16b | Außendurchmesser |
| | | 17 | äußeres Rotorlager |
| 3a | Abstand von 3, 4 | 18 | innere Radialwandung |
| 3b | Abstand 3, 30d | 19 | Außenwandung |
| 4 | Querschnittsebene, Wälzkörperebene | 20 | rotorseitige Zahnscheibeneinrichtung |
| 4b | Abstand 4, 20d | 20a | Außendurchmesser |
| 5 | Nabenachse | 20b | axiale Breite |
| 5a | Durchgangsöffnung | 20c | lichter Innendurchmesser |
| 6 | rotorseitiges Nabenlager | 20d | zentrale Querschnittsebene |
| 6a | axiale Breite | | |
| 6b | Außendurchmesser | 21 | Eingriffskörper |
| 7 | äußeres Nabenlager | 21a | axiale Erstreckung |
| 8 | Wälzlager | 22 | Stirnverzahnung |
| 8a | Wälzkörper | 22a | Außendurchmesser |
| 8b | axiale Breite | 22b | radiale Höhe |
| 8c | Durchmesser 8a | 23 | Radialverzahnung |
| 9 | Freilaufeinrichtung | 23a | axiale Länge |
| 10 | Rotor | 24 | Vorspanneinrichtung |
| 10a | nabenseitige Stirnseite | 24a | Halter |
| 10b | Ritzelaufnahme | 25 | Einbaulänge |
| 10c | Außendurchmesser 10b | 26,27 | Lagerabstand |
| 11 | Rotorkörper | 28 | Abstand |
| 11a | nabenseitiges Ende | 29 | Abstand |
| 11b | äußeres Ende | 30 | nabenseitige Zahnscheibeneinrichtung |
| 11c | Konusabschnitt | | |
| 12 | erstes Rotorteil | 30a | Außendurchmesser |
| 121 | Verbindungsbereich | 30b | axiale Breite |
| 121a | Länge von 121 | 30c | lichter Innendurchmesser |
| 122 | Gewindebereich | 30d | zentrale Querschnittsebene |
| 122a | Länge von 122 | | |
| 123 | Führungsbereich | 31 | Eingriffskörper |
| 123a | Länge von 123 | 31a | axiale Erstreckung |
| 13 | radiale Innenverzahnung | 32 | Stirnverzahnung |
| 14 | zweites Rotorteil | 32b | radiale Höhe |
| 141 | Verbindungsabschnitt | 33 | Radialverzahnung |
| 141a | Länge von 141 | 33a | axiale Länge |
| 142 | Gewindeabschnitt | 33b | äußere Koppelkontur |
| 142a | Länge von 142 | 33c | Außenumfang |
| 143 | Führungsabschnitt | 34 | Vorspanneinrichtung |
| 143a | Länge von 143 | 35 | Aufnahme |
| 145 | Durchmesser von 143 | 36 | Innenwandung |
| 147 | Toleranz von 142/122 | 37 | Wandung |
| 38 | Bremsscheibenaufnahme | 58 | Spanneinrichtung |
| 40 | Gewindering | 59 | Spannachse |
| 40a | rotorseitiges Ende, axiale Außenseite | 59a | Endstück |
| | | 59b | Durchmesser |
| 40b | nabenseitiges Ende, axiale Innenseite | 60 | Endabschnitt |
| | | 60a | nabenseitiges Ende (60) |
| 40c | zentrale Durchgangsöffnung | 60b | anderes Ende von 60 |
| | | 61 | Durchmesser |
| 40d | Innenkontur von 40 | 62 | Nut |
| 41 | Außengewinde | 63 | vergrößerter Durchmesserbereich |
| 41a,b | Gewindegang | | |
| 41c | axiale Länge | 65 | Dichtungseinrichtung |
| 41d | Außenkontur | 66 | innerer Dichtspalt |
| 42 | axiale Breite | 66a | Konusspalt |
| 43 | radiale Innenverzahnung | 66b | lichte Spaltweite |
| 43a | axiale Länge | 67 | äußerer Dichtspalt |
| 43b | innere Koppelkontur | 67a | lichte Abmessung |
| 44 | zentrale Vertiefung, konische Vertiefung | 68 | Dichtungseinheit |
| | | 69 | Ringabschnitt |
| 44a | Winkel | 70 | Dichtlippe/elastische Wandung |
| 44b | Tiefe | | |
| 44c | Höhe | 70a | Außendurchmesser |
| 44d | abgestufte Vertiefung | 100 | Fahrrad |
| 45 | (konischer) Stützabschnitt | 101 | Rad, Vorderrad |
| | | 102 | Rad, Hinterrad |
| 45a | Winkel | 103 | Rahmen |
| 46 | Dichtwandung | 104 | Gabel, Federgabel |
| 47 | Dichtnut | 105 | Hinterraddämpfer |
| 47a | Durchmesser | 106 | Lenker |
| 48 | Gewinde in 2 | 107 | Sattel |
| 49a,b | Gewindegang | 109 | Speiche |
| 50,51 | Endanschlag | 110 | Felge |
| 52 | Hülsenkörper | 111 | Ritzeleinrichtung |
| 53 | Abstandhalter | 112 | Tretkurbel |
| 54,55 | radiale Verdickungen | F | Freilaufzustand |
| 54a | Absatz | E | Eingriffsstellung |
| 55a | Absatz | | |
| 56 | Aufnahmekontur (konisch) | | |

## Patentansprüche

1. Rotor (10) für eine Nabe für wenigstens teilweise muskelbetriebene Fahrzeuge und insbesondere Fahrräder (100) umfassend
einen Rotorkörper (11), der sich von einem inneren, nabenseitigen Ende (11a) zu einem äußeren Ende (11b) hin erstreckt, und umfassend eine mit dem Rotorkörper (11) gekoppelte rotorseitige Zahnscheibeneinrichtung (20), um den Rotorkörper (10) in Antriebsrichtung mit einem Nabengehäuse drehfest zu koppeln und in einem Freilaufzustand (F) von einem Nabengehäuse (2) zu entkoppeln,
wobei die rotorseitige Zahnscheibeneinrichtung (20) eine Stirnverzahnung (23) zum Eingriff in eine mit einem Nabengehäuse (2) gekoppelte Stirnverzahnung (33) aufweist, und wobei die rotorseitige Zahnscheibeneinrichtung (20) über wenigstens eine Vorspanneinrichtung (24) in eine Eingriffsstellung (E) vorbelastet wird,
wobei außen an dem Rotorkörper (10) wenigstens eine Ritzelaufnahme (10b) für wenigstens eine Ritzeleinrichtung (111) ausgebildet ist, und wobei der Rotorkörper (10) an dem nabenseitigen Ende (11a) eine innere Radialwandung (18) zur radialen Abstützung eines nabenseitigen Rotorlagers (16) umfasst,
**dadurch gekennzeichnet,**
**dass** an einer Stirnseite (10a) an dem nabenseitigen Ende (11a) des Rotors (10) radial zwischen der inneren Radialwandung (18) und der Außenwandung (19) eine von der Stirnseite (10a) aus zugängliche umlaufende Aufnahme (15) ausgebildet ist, in der die rotorseitige Zahnscheibeneinrichtung (20) in Antriebsrichtung drehfest und axial beweglich aufgenommen ist.

2. Rotor (10) nach dem vorhergehenden Anspruch, wobei der Rotorkörper (11) wenigstens zwei Rotorlager (16, 17) umfasst, nämlich das nabenseitige Rotorlager (16) und ein davon weiter entferntes äußeres Rotorlager (17) und wobei wenigstens ein Rotorlager (16) dazu ausgebildet ist, den Rotorkörper (11) auf einer Nabenachse (2) zu lagern
und wobei der Rotorkörper (11) an dem nabenseitigen Ende (11a) einen Endabschnitt (60) mit vergrößertem Durchmesser aufweist, an dem die rotorseitige Zahnscheibeneinrichtung (20) aufgenommen ist, wobei auf dem Innenumfang (20) des Endabschnitts eine radiale Innenverzahnung (13) ausgebildet ist, in welcher die rotorseitige Zahnscheibeneinrichtung (20) mit einer äußeren Radialverzahnung (23) in Antriebsrichtung drehfest koppelt
und wobei der Endabschnitt (60) auf dem Außenumfang eine umlaufende Nut (62) mit einer darin angeordneten Dichtungseinheit (68) umfasst wobei die Dichtungseinheit (68) einen umlaufenden Ringabschnitt (69) in der Nut (62) und eine von dem Ringabschnitt (69) schräg nach außen abstehende elastische Dichtlippe (70) umfasst und wobei der Ringabschnitt (69) und die elastische Dichtlippe (70) im montierten Zustand eine zu dem äußeren Ende (11b) hin geöffnete V-Form aufweisen.

3. Rotor (10) nach einem der beiden vorhergehenden Ansprüche, wobei der Rotorkörper (11) zwei Rotorteile (12, 14) umfasst, wobei ein erstes Rotorteil (12) das äußere Rotorlager (17) und ein zweites Rotorteil (14) das nabenseitige Rotorlager (16) abstützt und wobei das zweite Rotorteil (14) in das erste Rotorteil (12) eingeschraubt ist.

4. Nabe (1) für wenigstens teilweise muskelbetriebene Fahrzeuge und insbesondere Fahrräder (100) umfassend
eine Nabenachse (5), ein Nabengehäuse, einen Rotor (10) nach einem der vorgehenden Ansprüche mit einem Rotorkörper (11), und eine Freilaufeinrichtung (9) mit zwei Zahnscheibeneinrichtungen (20, 30), nämlich eine mit dem Nabengehäuse gekoppelte nabenseitige Zahnscheibeneinrichtung (30) und die damit zusammenwirkende und mit dem Rotorkörper (11) gekoppelte rotorseitige Zahnscheibeneinrichtung (20), um den Rotor (10) mit dem Nabengehäuse (2) in Antriebsrichtung drehfest zu koppeln und in einem Freilaufzustand (F) voneinander zu entkoppeln,
wobei die Zahnscheibeneinrichtungen (20, 30) jeweils eine Stirnverzahnung (22, 32) zum Eingriff ineinander aufweisen, und über wenigstens eine Vorspanneinrichtung (24, 34) in eine Eingriffsstellung (E) vorbelastet werden,
wobei außen an dem Rotorkörper (10) wenigstens eine Ritzelaufnahme (10b) für wenigstens eine Ritzeleinrichtung (111) ausgebildet ist.

5. Nabe nach dem vorhergehenden Anspruch, wobei die nabenseitige Zahnscheibeneinrichtung (30) radial innerhalb des Nabengehäuses (2) aufgenommen ist und die Stirnverzahnung (32) zu dem Rotor (10) hin ausgerichtet ist
und/oder wobei die rotorseitige Zahnscheibeneinrichtung (20) radial innerhalb des Rotors (10) aufgenommen ist und die Stirnverzahnung (22) zu dem Nabengehäuse (2) hin ausgerichtet ist
und wobei wenigstens die halbe axiale Breite (20b) der rotorseitigen Zahnscheibeneinrichtung (20) radial innerhalb des Nabengehäuses (2) aufgenommen ist.

6. Nabe nach einem der beiden vorhergehenden Ansprüche, wobei ein Außendurchmesser (10c) der Ritzelaufnahme (10b) kleiner ist als ein Außendurchmesser (20a) der rotorseitigen Zahnscheibeneinrichtung (20) und/oder kleiner ist als ein Außendurchmesser (22a) der Stirnverzahnung (22) der rotorseitigen Zahnscheibeneinrichtung (20).

7. Nabe nach einem der drei vorhergehenden Ansprüche, wobei die nabenseitige Zahnscheibeneinrichtung (30) eine äußere Radialverzahnung (33) aufweist, welche mit einer radialen Innenverzahnung (43) in dem Nabengehäuse (2) im Eingriff steht und axial bewegbar ist und wobei die radiale Innenverzahnung (43) an einem in das Nabengehäuse (2) eingeschraubten Gewindering (40) ausgebildet ist.

8. Nabe nach dem vorhergehenden Anspruch, wobei der Gewindering (40) an der axialen Außenseite (40a) eine konische Vertiefung (44) aufweist, in welche ein an der nabenseitigen Stirnseite (10a) des Rotors (10) ausgebildeter Konusabschnitt (11c) berührungsfrei eintaucht.

9. Nabe nach einem der beiden vorhergehenden Ansprüche, wobei der Gewindering (40) auf der dem Rotor (10) abgewandten axialen Innenseite (40b) einen Stützabschnitt (45) aufweist, welche an einer entsprechend ausgebildeten Aufnahmekontur (56) in dem Nabengehäuse (2) anliegt.

10. Nabe nach einem der drei vorhergehenden Ansprüche, wobei sich das Außengewinde (41) des Gewinderings (40) axial nach außen über die nabenseitige Zahnscheibeneinrichtung (30) hinaus bis radial über die rotorseitige Zahnscheibeneinrichtung (20) hin erstreckt und diese zum Teil überdeckt.

11. Nabe nach einem der sieben vorhergehenden Ansprüche, wobei wenigstens eine Zahnscheibeneinrichtung (20, 30) einen Eingriffskörper (21, 31) aufweist, an dem die Stirnverzahnung (22, 32) und die äußere Radialverzahnung (23, 33) ausgebildet sind
und wobei der Eingriffskörper (21, 31) eine axiale Erstreckung (21a, 31a) aufweist, die größer ist als eine axiale Breite (8b) eines Wälzlagers und insbesondere größer ist als eine axiale Breite (16a) des nabenseitigen Rotorlagers (16)
und wobei der Eingriffskörper (21, 31) eine axiale Erstreckung (21a, 31a) aufweist, die größer ist als eine radiale Höhe (22b, 32b) der Stirnverzahnung (22, 32).

12. Nabe nach einem der acht vorhergehenden Ansprüche, wobei der Rotor (10) mit zwei axial voneinander beabstandeten Rotorlagern (16, 17) auf der Nabenachse (5) drehbar gelagert ist, nämlich einem näher an dem Nabengehäuse angeordneten nabenseitigen Rotorlager (16) und einem weiter von dem Nabengehäuse entfernten äußeren Rotorlager (17), und wobei das Nabengehäuse (2) mit zwei axial voneinander beabstandeten Nabenlagern (6, 7) auf der Nabenachse (5) drehbar gelagert ist, nämlich einem näher am Rotor angeordneten rotorseitigen Nabenlager (6) und einem weiter von dem Rotor entfernten äußeren Nabenlager (7)
und wobei der Rotorkörper (11) ein nabenseitiges Ende (11a) und ein gegenüberliegendes äußeres Ende (11b) aufweist und wobei der Rotorkörper (11) an dem nabenseitigen Ende (11a) einen Endabschnitt (60) mit vergrößertem Durchmesser (61) aufweist, an dem die rotorseitige Zahnscheibeneinrichtung (20) aufgenommen ist, wobei sich der Endabschnitt (60) von einem nabenseitigen Ende (60a) des Endabschnitts (60) zu einem anderen Ende (60b) erstreckt.

13. Nabe nach einem der neun vorhergehenden Ansprüche, wobei zwischen dem Nabengehäuse (2) und dem Rotor (10) eine Dichtungseinrichtung (65) ausgebildet ist, die zwischen dem Nabengehäuse (2) und dem Rotor (10) einen axial inneren Dichtspalt (66) und axial weiter außen einen äußeren Dichtspalt (67) und axial dazwischen eine Dichtungseinheit (68) mit einer Dichtlippe (68b) umfasst
und wobei der axial innere Dichtspalt (66) durch einen Konusspalt (66a) zwischen dem Konusabschnitt (11c) an dem Rotor (10) und der konischen Vertiefung (44) in dem Gewindering (40) ausgebildet wird und eine lichte Spaltweite (66b) kleiner 1,5 mm aufweist
und wobei der Endabschnitt (60) des Rotors (10) auf dem Außenumfang eine umlaufende Nut (62) umfasst, in welcher die Dichtungseinheit (68) angeordnet ist, wobei die Dichtungseinheit (68) einen Ringabschnitt (69) in der Nut und eine von dem Ringabschnitt schräg nach außen abstehende elastische Dichtlippe (70) umfasst, wobei der Ringabschnitt (68a) und die elastische Dichtlippe (70) im montierten Zustand eine zu dem axial äußeren Ende (11b) hin geöffnete V-Form aufweisen.

14. Nabe nach einem der beiden vorhergehenden Ansprüchen, wobei an dem nabenseitigen Ende (60a) des Endabschnitts (60) des Rotors (10) der Konusabschnitt (11c) ausgebildet ist und wobei an dem anderen Ende (60b) des Endabschnitts (60) ein nochmals vergrößerter Durchmesserbereich (63) ausgebildet ist und wobei zwischen dem vergrößerten Durchmesserbereich (63) und einer Dichtwandung (46) an dem rotorseitigen Ende des Nabengehäuses (2) ein Dichtspalt (67) zwischen Rotor (10) und Nabengehäuse (2) ausgebildet ist, wobei der Dichtspalt (67) eine lichte Abmessung (67a) von weniger als 1 mm oder weniger als 0,5 mm aufweist
und wobei in dem Nabengehäuse (2) benachbart zu der Dichtwandung (46) eine umlaufende Dichtnut (47) ausgebildet ist, in welche die elastische Dichtlippe (70) hineinragt und wobei die elastische Dichtlippe (70) in die Dichtnut (47) hineinragt und sich z.B. bei von außen eindringendem Wasser elastisch an die Wandung der Dichtnut (47) anlegt und/oder wobei ein radial größter Innendurchmesser (47a) der Dichtnut (47) größer ist als ein im Normalzustand größter Außendurchmesser (70a) der elastischen Dichtlippe (70) und wobei sich der größte Innendurchmesser (47a) der Dichtnut (47) axial weiter außen befindet als der größte Außendurchmesser (70a) der elastischen Dichtlippe (70) und wobei ein im Normalzustand größter Außendurchmesser (70a) der elastischen Dichtlippe (70) größer ist als ein Durchmesser (47a) des äußeren Dichtspaltes (67) zwischen Nabengehäuse und Rotor.

## Claims

1. Rotor (10) for a hub for at least partially muscle-powered vehicles and in particular bicycles (100), comprising a rotor body (11), which extends from an inner, hub-side end (11a) toward an outer end (11b),
and comprising a rotor-side toothed disk device (20) coupled with the rotor body (11), to couple the rotor body (10) with a hub shell in a rotationally fixed manner in the driving direction, and to decouple from the hub shell (2) in a freewheeling state (F),
wherein the rotor-side toothed disk device (20) comprises an end toothing (23) for engagement with an end toothing (33) coupled to a hub shell (2), and wherein the rotor-side toothed disk device (20) is biased to an engagement position (E) by means of at least one biasing device (24),
wherein at least one sprocket accommodation (10b) for at least one sprocket device (111) is configured outwardly on the rotor body (10), and wherein the rotor body (10) comprises on the hub-side end (11a), an inner radial wall (18) to radially support a hub-side rotor bearing (16),
**characterized in**
**that** on an end face (10a) on the hub-side end (11a) of the rotor (10), radially between the inner radial wall (18) and the outer wall (19), a circumferential accommodation (15) accessible from the end face (10a) is configured, in which the rotor-side toothed disk device (20) is accommodated in a rotationally fixed manner in the driving direction and axially movable.

2. The rotor (10) according to the preceding claim, wherein the rotor body (11) comprises at least two rotor bearings (16, 17), namely, the hub-side rotor bearing (16) and an outer, further distant rotor bearing (17), and wherein at least one rotor bearing (16) is configured to support the rotor body (11) on a hub axle (2),
and wherein the rotor body (11) comprises on the hub-side end (11a), an end portion (60) with an enlarged diameter, on which the rotor-side toothed disk device (20) is accommodated, wherein an inner radial toothing (13) is configured on the inner periphery (20) of the end portion, in which the rotor-side toothed disk device (20) couples to an outer radial toothing (23) in a rotationally fixed manner in the driving direction, wherein the end portion (60) on the outer periphery comprises a circumferential groove (62) with a sealing unit (68) disposed therein, wherein the sealing unit (68) comprises a circumferential ring portion (69) in the groove (62) and an elastic sealing lip (70) protruding from the ring portion (69) obliquely outwardly, and wherein in the mounted condition, the ring portion (69) and the elastic sealing lip (70) show a V-shape open toward the outer end (11b).

3. The rotor (10) according to any of the two preceding claims, wherein the rotor body (11) comprises two rotor parts (12, 14), wherein a first rotor part (12) supports the outer rotor bearing (17), and a second rotor part (14) supports the hub-side rotor bearing (16), and wherein the second rotor part (14) is screwed into the first rotor part (12).

4. Hub (1) for at least partially muscle-powered vehicles and in particular bicycles (100) comprising
a hub axle (5), a hub shell, a rotor (10) according to any of the preceding claims with a rotor body (11), and a freewheel device (9) with two toothed disk devices (20, 30), namely, one hub-side toothed disk device (30) coupled to the hub shell, and the rotor-side toothed disk device (20) interacting therewith and coupled to the rotor body (11), to couple the rotor (10) to the hub shell (2) in a rotationally fixed manner in the driving direction, and to decouple them from one another in a freewheeling state (F),
wherein each of the toothed disk devices (20, 30) comprises an end toothing (22, 32) for engagement with one another, and is biased by means of at least one biasing device (24, 34) to an engagement position (E),
wherein at least one sprocket accommodation (10b) for at least one sprocket device (111) is configured outwardly on the rotor body (10).

5. The hub according to the preceding claim, wherein the hub-side toothed disk device (30) is accommodated radially within the hub shell (2), and the end toothing (32) is oriented to the rotor (10),
and/or wherein the rotor-side toothed disk device (20) is accommodated radially within the rotor (10), and the end toothing (22) is oriented to the hub shell (2),
and wherein at least half the axial width (20b) of the rotor-side toothed disk device (20) is accommodated radially within the hub shell (2).

6. The hub according to any of the two preceding claims, wherein the outer diameter (10c) of the sprocket accommodation (10b) is smaller than the outer diameter (20a) of the rotor-side toothed disk device (20) and/or smaller than the outer diameter (22a) of the end toothing (22) of the rotor-side toothed disk device (20).

7. The hub according to any of the three preceding claims, wherein the hub-side toothed disk device (30) comprises an outer radial toothing (33), which is engaged with an inner radial toothing (43) in the hub shell (2) and is axially movable, and wherein the inner radial toothing (43) is configured on a threaded ring (40) screwed into the hub shell (2).

8. The hub according to the preceding claim, wherein the threaded ring (40) on the outer axial surface (40a) has a conical depression (44), into which a conical portion (11c) configured on the hub-side end face (10a) of the rotor (10) plunges contactless.

9. The hub according to any of the two preceding claims, wherein the threaded ring (40) has a support portion (45) on the axially inner surface (40b) facing away from the rotor (10), which support portion bears against a correspondingly configured accommodating contour (56) in the hub shell (2).

10. The hub according to any of the three preceding claims, wherein the external thread (41) of the threaded ring (40) extends axially outwardly beyond the hub-side toothed disk device (30) up to radially beyond the rotor-side toothed disk device (20), which it partially overlaps.

11. The hub according to any of the seven preceding claims, wherein at least one toothed disk device (20, 30) comprises an engagement body (21, 31), on which the end toothing (22, 32) and the outer radial toothing (23, 33) are configured,
and wherein the engagement body (21, 31) comprises an axial extension (21a, 31a), which is larger than the axial width (8b) of a roller bearing, and is in particular larger than the axial width (16a) of the hub-side rotor bearing (16),
and wherein the engagement body (21, 31) comprises an axial extension (21a, 31a), which is larger than the radial height (22b, 32b) of the end toothing (22, 32).

12. The hub according to any of the eight preceding claims, wherein the rotor (10) is supported for rotation with two axially spaced-apart rotor bearings (16, 17) on the hub axle (5), namely, a hub-side rotor bearing (16) disposed closer to the hub shell, and an outer rotor bearing (17) further distant from the hub shell, and wherein the hub shell (2) is supported for rotation with two axially spaced apart hub bearings (6, 7) on the hub axle (5), namely, a rotor-side hub bearing (6) disposed closer to the rotor and an outer hub bearing (7) further distant from the rotor,
and wherein the rotor body (11) comprises a hub-side end (11a) and an opposite, outer end (11b), and wherein the rotor body (11) on the hub-side end (11a), comprises an end portion (60) with an enlarged diameter (61), on which the rotor-side toothed disk device (20) is accommodated, wherein the end portion (60) extends from a hub-side end (60a) of the end portion (60) to another end (60b).

13. The hub according to any of the nine preceding claims, wherein a sealing device (65) is configured between the hub shell (2) and the rotor (10), having an axially inner sealing gap (66) between the hub shell (2) and the rotor (10), and axially further outwardly, an outer sealing gap (67), and axially in-between, a sealing unit (68) with a sealing lip (68b),
and wherein the axially inner sealing gap (66) is configured by a cone gap (66a) between the conical portion (11c) on the rotor (10) and the conical depression (44) in the threaded ring (40), and has a clear gap width (66b) smaller than 1.5 mm,
and wherein the end portion (60) of the rotor (10) on the outer periphery comprises a circumferential groove (62), in which the sealing unit (68) is disposed, wherein the sealing unit (68) comprises a ring portion (69) in the groove and an elastic sealing lip (70) protruding from the ring portion obliquely outwardly, wherein in the mounted condition, the ring portion (68a) and the elastic sealing lip (70) show a V-shape open toward the axially outer end (11b).

14. The hub according to any of the two preceding claims, wherein the conical portion (11c) is configured on the hub-side end (60a) of the end portion (60) of the rotor (10), and wherein a further enlarged diameter area (63) is configured on the other end (60b) of the end portion (60),
and wherein a sealing gap (67) is configured between the enlarged diameter area (63) and a sealing wall (46) on the rotor-side end of the hub shell (2) between the rotor (10) and the hub shell (2), wherein the sealing gap (67) has a clear dimension (67a) of less than 1 mm or less than 0.5 mm,
and wherein a circumferential sealing groove (47) is configured in the hub shell (2) adjacent to the sealing wall (46), into which the elastic sealing lip (70) protrudes, and wherein the elastic sealing lip (70) protrudes into the sealing groove (47) and e.g. in the case of water penetrating from the outside, bears elastically against the wall of the sealing groove (47), and wherein the radially largest inner diameter (47a) of the sealing groove (47) is larger than what is the largest outer diameter (70a) of the elastic sealing lip (70) in the normal state, and wherein the largest inner diameter (47a) of the sealing groove (47) is axially further outwardly than the largest outer diameter (70a) of the elastic sealing lip (70), and wherein what is the largest outer diameter (70a) of the elastic sealing lip (70) in the normal state, is larger than the diameter (47a) of the outer sealing gap (67) between the hub shell and the rotor.

## Revendications

1. Rotor (10) pour un moyeu pour des véhicules entraînés, au moins en partie, par force musculaire, et en particulier bicyclettes (100), comprenant un corps de rotor (11) qui s'étend d'une extrémité intérieure (11a), côté moyeu, à une extrémité extérieure (11b), et comprenant un ensemble de disque denté côté rotor (20) couplé au corps de rotor (11) pour coupler de manière solidaire en rotation le corps de rotor (10) à un carter de moyeu dans le sens d'entraînement et pour le désaccoupler d'un carter de moyeu (2) dans un état de roue libre (F), dans lequel ledit ensemble de disque denté côté rotor (20) présente une denture frontale (23) destinée à s'engager avec une denture frontale (33) couplée à un carter de moyeu (2), et dans lequel ledit ensemble de disque denté côté rotor (20) est précontraint dans une position d'engagement (E) au moyen d'au moins un dispositif de précontrainte (24),
dans lequel au moins un logement de pignon (10b) pour au moins un dispositif de pignon (111) est réalisé à l'extérieur du corps de rotor (10), et dans lequel le corps de rotor (10) comprend une paroi radiale intérieure (18) à l'extrémité côté moyeu (11a), destinée à supporter radialement un palier de rotor côté moyeu (16),
**caractérisé par le fait**
**qu'**un logement circonférentiel (15), accessible depuis la face frontale (10a), est réalisé sur la face frontale (10a) à l'extrémité côté moyeu (11a) du rotor (10), radialement entre la paroi radiale intérieure (18) et la paroi extérieure (19), dans lequel l'ensemble de disque denté côté rotor (20) est reçu de manière solidaire en rotation dans le sens d'entraînement et de manière axialement mobile.

2. Rotor (10) selon la revendication précédente, dans lequel le corps de rotor (11) comprend au moins deux paliers de rotor (16, 17), à savoir le palier de rotor côté moyeu (16) et un palier de rotor extérieur (17) plus éloigné de celui-ci, et dans lequel au moins un palier de rotor (16) est configuré pour supporter le corps de rotor (11) sur un axe de moyeu (2),
et dans lequel le corps de rotor (11) présente une section d'extrémité (60) de diamètre accru à l'extrémité côté moyeu (11a), sur laquelle est reçu l'ensemble de disque denté côté rotor (20), dans lequel une denture radiale interne (13) est formée sur la circonférence intérieure (20) de la section d'extrémité, dans laquelle l'ensemble de disque denté côté rotor (20) est couplé de manière solidaire en rotation, avec une denture radiale externe (23), dans le sens d'entraînement,
et dans lequel la section d'extrémité (60) comprend une rainure circonférentielle (62) sur la circonférence extérieure, avec une unité d'étanchéité (68) disposée dans celle-ci, dans lequel ladite unité d'étanchéité (68) comprend une section annulaire circonférentielle (69) dans la rainure (62) et une lèvre d'étanchéité élastique (70) faisant saillie obliquement vers l'extérieur à partir de la section annulaire (69), et dans lequel la section annulaire (69) et la lèvre d'étanchéité élastique (70) présentent une forme en V ouverte vers l'extrémité extérieure (11b) à l'état assemblé.

3. Rotor (10) selon l'une quelconque des deux revendications précédentes, dans lequel le corps de rotor (11) comprend deux parties de rotor (12, 14), dans lequel une première partie de rotor (12) supporte le palier extérieur de rotor (17) et une deuxième partie de rotor (14) supporte le palier de rotor côté moyeu (16), et dans lequel la deuxième partie de rotor (14) est vissée dans la première partie de rotor (12).

4. Moyeu (1) pour des véhicules entraînés, au moins en partie, par force musculaire, et en particulier bicyclettes (100), comprenant un axe de moyeu (5), un carter de moyeu, un rotor (10) selon l'une quelconque des revendications précédentes, avec un corps de rotor (11), et un dispositif de roue libre (9) comprenant deux ensembles de disque denté (20, 30), à savoir un ensemble de disque denté côté moyeu (30) couplé au carter de moyeu et l'ensemble de disque denté côté rotor (20) agissant de concert avec celui-ci et couplé au corps de rotor (11) afin de coupler de manière solidaire en rotation le rotor (10) au carter de moyeu (2) dans le sens d'entraînement et de les découpler l'un de l'autre dans un état de roue libre (F),
dans lequel les ensembles de disque denté (20, 30) présentent chacun une denture frontale (22, 32) pour s'engrener l'un dans l'autre, et sont précontraints dans une position d'engagement (E) au moyen d'au moins un dispositif de précontrainte (24, 34),
dans lequel au moins un logement de pignon (10b) pour au moins un dispositif de pignon (111) est réalisé à l'extérieur du corps de rotor (10).

5. Moyeu selon la revendication précédente, dans lequel l'ensemble de disque denté côté moyeu (30) est reçu radialement à l'intérieur du carter de moyeu (2) et la denture frontale (32) est orientée vers le rotor (10)
et/ou dans lequel l'ensemble de disque denté côté rotor (20) est reçu radialement à l'intérieur du rotor (10) et la denture frontale (22) est orientée vers le carter de moyeu (2)
et dans lequel au moins la moitié de la largeur axiale (20b) de l'ensemble de disque denté côté rotor (20) est reçue radialement à l'intérieur du carter de moyeu (2).

6. Moyeu selon l'une quelconque des deux revendications précédentes, dans lequel un diamètre extérieur (10c) du logement de pignon (10b) est inférieur à un diamètre extérieur (20a) de l'ensemble de disque denté côté rotor (20) et/ou est inférieur à un diamètre extérieur (22a) de la denture frontale (22) de l'ensemble de disque denté côté rotor (20).

7. Moyeu selon l'une quelconque des trois revendications précédentes, dans lequel l'ensemble de disque denté côté moyeu (30) comprend une denture radiale extérieure (33) qui s'engage avec une denture radiale intérieure (43) dans le carter de moyeu (2) et est mobile axialement, et dans lequel la denture radiale intérieure (43) est formée sur une bague filetée (40) vissée dans le carter de moyeu (2).

8. Moyeu selon la revendication précédente, dans lequel la bague filetée (40) présente un évidement conique (44) sur la face axiale extérieure (40a), dans lequel s'engage sans contact une section conique (11c) formée sur la face frontale côté moyeu (10a) du rotor (10).

9. Moyeu selon l'une quelconque des deux revendications précédentes, dans lequel la bague filetée (40) présente une section d'appui (45) sur la face axiale intérieure (40b) orientée dans la direction opposée au rotor (10), qui s'appuie contre un contour de réception (56) formé de manière correspondante dans le carter de moyeu (2).

10. Moyeu selon l'une quelconque des trois revendications précédentes, dans lequel le filetage extérieur (41) de la bague filetée (40) s'étend axialement vers l'extérieur au-delà de l'ensemble de disque denté côté moyeu (30) et radialement sur l'ensemble de disque denté côté rotor (20) et recouvre celui-ci en partie.

11. Moyeu selon l'une quelconque des sept revendications précédentes, dans lequel au moins un ensemble de disque denté (20, 30) comprend un corps d'engagement (21, 31) sur lequel sont formées la denture frontale (22, 32) et la denture radiale extérieure (23, 33),
et dans lequel le corps d'engagement (21, 31) présente une extension axiale (21a, 31a) qui est supérieure à une largeur axiale (8b) d'un roulement et, en particulier, supérieure à une largeur axiale (16a) du palier de rotor côté moyeu (16),
et dans lequel le corps d'engagement (21, 31) présente une extension axiale (21a, 31a) qui est supérieure à une hauteur radiale (22b, 32b) de la denture frontale (22, 32).

12. Moyeu selon l'une quelconque des huit revendications précédentes, dans lequel le rotor (10) est monté de manière rotative sur l'axe de moyeu (5) au moyen de deux paliers de rotor (16, 17) espacés axialement, à savoir un palier de rotor côté moyeu (16) situé plus près du carter de moyeu et un palier de rotor extérieur (17) situé plus loin du carter de moyeu, et dans lequel le carter de moyeu (2) est monté de manière rotative sur l'axe de moyeu (5) au moyen de deux paliers de moyeu (6, 7) espacés axialement, à savoir un palier de moyeu côté rotor (6) situé plus près du rotor et un palier de moyeu extérieur (7) situé plus loin du rotor,
et dans lequel le corps de rotor (11) présente une extrémité côté moyeu (11a) et une extrémité extérieure opposée (11b), et dans lequel le corps de rotor (11) présente une section d'extrémité (60) de diamètre accru à l'extrémité côté moyeu (11a), sur laquelle est reçu l'ensemble de disque denté côté rotor (20), dans lequel la section d'extrémité (60) s'étend d'une extrémité côté moyeu (60a) de la section d'extrémité (60) à une autre extrémité (60b).

13. Moyeu selon l'une quelconque des neuf revendications précédentes, dans lequel un dispositif d'étanchéité (65) est formé entre le carter de moyeu (2) et le rotor (10), qui comprend un jeu d'étanchéité interne axial (66) entre le carter de moyeu (2) et le rotor (10), et un jeu d'étanchéité externe (67) situé axialement plus vers l'extérieur, et une unité d'étanchéité (68) avec une lèvre d'étanchéité (68b) située axialement entre eux,
et dans lequel le jeu d'étanchéité interne axial (66) est formé par un jeu conique (66a) entre la section conique (11c) sur le rotor (10) et l'évidement conique (44) dans la bague filetée (40), et présente une largeur de jeu libre (66b) inférieure à 1,5 mm
et dans lequel la section d'extrémité (60) du rotor (10) comprend une rainure circonférentielle (62) sur la circonférence extérieure, dans laquelle l'unité d'étanchéité (68) est disposée, dans lequel l'unité d'étanchéité (68) comprend une section annulaire (69) dans la rainure et une lèvre d'étanchéité élastique (70) faisant saillie obliquement vers l'extérieur à partir de la section annulaire, dans lequel la section annulaire (68a) et la lèvre d'étanchéité élastique (70) présentent une forme en V ouverte vers l'extrémité axiale extérieure (11b) à l'état assemblé.

14. Moyeu selon l'une quelconque des deux revendications précédentes, dans lequel la section conique (11c) est formée à l'extrémité côté moyeu (60a) de la section d'extrémité (60) du rotor (10), et dans lequel une zone de diamètre (63) encore une fois agrandie est formée à l'autre extrémité (60b) de la section d'extrémité (60), et dans lequel un jeu d'étanchéité (67) est formé entre le rotor (10) et le carter de moyeu (2), entre la zone de diamètre (63) agrandie et une paroi d'étanchéité (46) à l'extrémité côté rotor du carter de moyeu (2), le jeu d'étanchéité (67) ayant une dimension libre (67a) inférieure à 1 mm ou inférieure à 0,5 mm,
et dans lequel une rainure d'étanchéité circonférentielle (47) est formée dans le carter de moyeu (2) adjacente à la paroi d'étanchéité (46), dans laquelle la lèvre d'étanchéité élastique (70) fait saillie, et dans lequel la lèvre d'étanchéité élastique (70) fait saillie dans la rainure d'étanchéité (47), et, par exemple en cas d'infiltration d'eau extérieure, elle épouse élastiquement la paroi de la rainure d'étanchéité (47)
et/ou dans lequel un diamètre intérieur maximal radial (47a) de la rainure d'étanchéité (47) est supérieur à un diamètre extérieur maximal à l'état normal (70a) de la lèvre d'étanchéité élastique (70), et dans lequel le diamètre intérieur maximal (47a) de la rainure d'étanchéité (47) est situé axialement plus à l'extérieur que le diamètre extérieur maximal (70a) de la lèvre d'étanchéité élastique (70), et dans lequel un diamètre extérieur maximal à l'état normal (70a) de la lèvre d'étanchéité élastique (70) est supérieur à un diamètre (47a) du jeu d'étanchéité extérieur (67) entre le carter de moyeu et le rotor.
